# EUROPÄISCHE PATENTSCHRIFT

(11) **EP 0 860 044 B1**
(45) Veröffentlichungstag und Bekanntmachung des Hinweises auf die Patenterteilung: **09.07.2003**
(21) Anmeldenummer: 96938061.7
(22) Anmeldetag: 04.11.1996
(51) Int. Cl.: H02G 1/12

(54) **Abisoliervorrichtung**
INSULATION STRIPPING DEVICE
DISPOSITIF DE DENUDAGE

(30) Priorität: 06.11.1995 CH 323595
(43) Veröffentlichungstag der Anmeldung: 26.08.1998
(60) Teilanmeldung: 02020379.0
(73) Patentinhaber: Schleuniger Holding AG, 3608 Thun (CH)
(72) Erfinder: LOCHER, Beat, CH-3608 Thun (CH)
(74) Vertreter: Rosenich, Paul
(86) Internationale Anmeldenummer: EP9604790
(87) Internationale Veröffentlichungsnummer: WO97017751

(56) Entgegenhaltungen:
- EP-A- 0 234 929
- EP-A- 0 423 443
- EP-A- 0 489 502
- EP-A- 0 499 753
- EP-A- 0 623 982
- WO-A-95/13641
- WO-A-96/24179
- US-A- 4 009 378
- US-A- 5 226 224
- PROSPEKT SCHLEUNIGER CS9100

## Beschreibung

Die Erfindung betrifft eine Trenn- und Abisoliervorrichtung zur Kabelverarbeitung, mit der Kabel durchtrennt bzw. deren Isolierschicht eingeschnitten und abgezogen werden kann. Solche Vorrichtungen sind bekannt. Zum Beispiel wurde durch die Anmelderin unter der Bezeichnung CS9100 eine Vorrichtung auf den Markt gebracht, die in bezug auf eine Kabelvorschubachse seitlich versetzte, nebeneinander liegende Messerpaare aufwies, die über einen oberen und einen unteren gemeinsamen Messerhalter von einem pneumatischen Antrieb so seitlich verschoben werden konnten, dass entweder durch das eine oder das andere Messer ein Kabel, das entlang der Achse in die Vorrichtung eingeschoben wurde, ein- bzw. durchgeschnitten werden konnte. Dazu waren selbstverständlich die oberen und unteren Messerhalter gegeneinander bewegbar. Ein Vorteil ist dabei gegenüber einer einzigen Messerposition gegeben; gleichzeitig ergibt sich aus der Praxis jedoch der Nachteil dieser Konstruktion in der Beschränktheit der möglichen Bearbeitungsgänge, die auf die beiden Messerpositionen beschränkt sind.

Eine Publikation der Firma Shin Meiwa Ind.Co.Ltd,Yokohama/JP (siehe auch US-A-5 226 224) beschreibt eine Vorrichtung mit einem Messerpaar, das an jedem Messer mehrere Schneiden aufweist. Nach herkömmlichem Kabellängstransport wird das Kabel dort mittels des Mehrschneidenmessers getrennt. Nach dem Messeröffnen bewegen sich die Kabelhandlingskomponenten linear und parallel zum Messer über gesteuerte Spindeln nach links oder rechts zu einer Abisolierstelle am Mehrschneidenmesser. Anschliessend werden die Handlingskomponenten beiderseits des Messers mit den geschnittenen Kabeln in Richtung Messer auf die geforderte Abisolierlänge verschoben. Danach erfolgen ein neuerlicher Messerhub auf den gewünschten Abisolierdurchmesser und der Abzug des Isolationsrestes (Slug) sowie der lineare Weiter- oder Rücktransport des Kabels, je nach Weiterverarbeitung.

Ein Nachteil dieser Einrichtung ist, dass die beiden Kabelhandlingskomponenten (vor und nach dem Messer) ständig in Längs- und Querrichtung verschoben werden müssen, was zu hohem Verschleiss an zwei voneinander an sich unabhängigen hochbeweglichen Bauteilen führt. Diese müssen zudem aufeinander besonders justiert sein, um positionsrichtig und ausschussfrei arbeiten zu können. Ausserdem ist die Verwendung eines Mehrschneidenmessers wirtschaftlich ungünstig, da es zu ungleichmässiger Abnutzung kommen kann und daher auch noch nicht abgenutzte Schneiden ausgewechselt werden müssen.

Zudem erfordert diese Vorrichtung eine besondere Flexibilität des Kabels, das andernfalls durch Zerstörung bedroht ist.

Eine andere bekannte Vorrichtung "Stripmaster Model 900" der Firma Ideal Ind.,Inc. Sycamore, USA, verfügt ebenso über nebeneinander angeordnete Formmesser mit unterschiedlichen wirksamen Messerdurchmessern, so dass in nebeneinander liegenden Einschuböffnungen Kabel mit unterschiedlichem Durchmesser eingeschoben und von den Messern geschnitten bzw. beim Hinausziehen wieder abisoliert werden können. Diese Vorrichtung eignet sich nicht für automatische Abisoliervorgänge.

Eine weitere bekannte Vorrichtung, wie in der EP-A1-623982 offengelegt, verfügt über eine Schwenkvorrichtung, mit der ein Kabel bei jeweils einem von zwei nebeneinander angeordneten Messern positioniert werden kann. Hierbei tritt wieder das Problem der Flexibilität des Kabels auf. Darüber hinaus kommt bei dieser Vorrichtung das Kabel nicht optimal senkrecht auf die Messerebene zu liegen, so dass Schnitte durch die Messer eventuell auch schräg durchgeführt werden, wodurch die Schnitte über eine schlechte Qualität verfügen können.

Eine weitere bekannte Vorrichtung der Firma Eubanks Engineering Co, Monrovia, USA mit der Bezeichnung "9800" verfügt über axial hintereinander angeordnete Messer mit unterschiedlichen Schnittiefen. Die Messer befinden sich an einem gemeinsamen oberen und unteren Messerträger, so dass ein eingesetztes Kabel entlang seiner Achse mehreren unterschiedlichen Bearbeitungsschritten gleichzeitig unterzogen werden kann. Eine solche Vorrichtung ist z.B. in der US-A-5146673 wiedergegeben. Der Nachteil einer solchen Anordnung liegt in einer relativ geringen Flexibilität bei der Auswahl der Bearbeitungsschritte, ausserdem ist durch den eingeschränkten Platz zwischen den Messern die mögliche Abisolierlänge eingeschränkt. Bei dem Versuch, die Abisolierlängen zu erhöhen, stiess man an Grenzen hinsichtlich der maximal vertretbaren Gerätegrösse.

Bei dem Stand der Technik "Kodera Typ 34" war die Abisolierlänge beschränkt auf den Abstand zwischen Messer und zweitem Rollenpaar. Mit einem speziellen Abisoliervorgang in Einzelschritten konnten zwar Einzelstücke mit der Länge dieses Abstandes nacheinander abgezogen (allerdings nicht vollständig vom Leiter heruntergezogen werden, lediglich stückweise am Leiter verschoben werden in Abzugsrichtung = Teilabzug) werden. Um längere Teilabisolierschritte zu ermöglichen, wurde der Kodera Typ 36 geschaffen mit einem vergrösserten Abstand zwischen Abisoliermessern und zweitem Rollenpaar mit dem Nachteil, dass mit dieser Vorrichtung keine kurzen Kabelstücke abisoliert werden konnten. Dieser Umstand soll durch ein neues Verfahren verbessert werden.

Probleme ergeben sich ebenso beim Auswurf des Abfalls (Slug) an Isolationsresten, die durch die Messer vom Leiter abgezogen werden und bisher fallweise nicht ordentlich entfernt wurden.

Ein weiteres Problem ergibt sich, dass bei den beim Bekannten - z.B. Eubanks 9800 - angebrachten Führungen mit starren Innendurchmessern dünnere, flexible Kabel nicht zentrisch geführt werden, was zu Problemen (häufigere Pannen) beim Kabelvorschub führen kann.

Der Erfindung liegt somit die Aufgabe zugrunde, eine verbesserte Abisoliervorrichtung zu schaffen, die hinsichtlich der Universalität verbessert ist, grössere Abisolierlängen erlaubt und die Nachteile bei den oben erwähnten Konstruktionen vermeidet.

Durch die erfindungsgemässe Vorrichtung mit den Merkmalen des Anspruches 1 wird die Aufgabe gelöst. Die neue Messeranordnung und deren Antrieb führen zu einer universellen, vollautomatisch tätigen und frei programmierbaren Trenn- bzw. Abisoliermöglichkeit. Diese wird durch zusätzliche, neue Verarbeitungsschritte bei Bedarf noch ergänzt. Bekannte Nachteile sind vermieden. Der relativ geringe zeitliche Nachteil, der sich durch die Bearbeitung des Kabels in nacheinander folgenden Arbeitsschritten ergibt, wird durch die Vorteile der Universalität für einen durchschnittlichen Anwender bei weitem überkompensiert. Auch die erfindungsgemäss mögliche kompakte Bauform wirkt sich in der Praxis günstig aus.

Weitere Merkmale der Erfindung sind in den abhängigen Ansprüchen beschrieben bzw. ergeben sich aus den nachstehenden Angaben, die mit den Ansprüchen, der Figurenbeschreibung und der Zeichnung die gesamthafte Offenbarung der zum Teil auch unabhängig voneinander einsetzbaren Merkmale der Erfindung darstellen.

Wichtig ist jedenfalls, dass erfindungsgemäss beliebige Werkzeugpositionen seitlich nebeneinander vorgesehen sind und eine Schrittmotorsteuerung diese Werkzeugpositionen programmierbar ansteuern kann, so dass einerseits in unterschiedlichen Werkzeugpositionen das Kabel - oder auch mehrere nebeneinander liegende Kabel - das, bzw. die in einer Position gehalten werden, bearbeitet werden können. Das gilt für Endloskabelverarbeitungen ebenso wie für jene Abisoliervorrichtungen, an denen eine Bedienperson oder ein Manipulator ein Kabelende in die Vorrichtung einführt und anschliessend wieder herauszieht.

Zweitens werden auch andere Arbeitsvorgänge erlaubt, wie z.B. Sägen, Einschneiden, Vertwisten, Verformen, Crimpen usw. des Kabels durch das Zusammenführen der Messer bzw. Werkzeuge, Schliessen und seitliches relativ zueinander Verschieben. Solches kann im Falle von Vertwistbacken als Werkzeuge mit keilförmigen Schrägflächen auch durch reine Vertikalbewegung zueinander realisiert sein. Weiters kann eine Vertwistlösung realisiert werden durch eine schwenkbare Ausführung der Werkzeughalter um einen Drehpunkt, der möglichst im Bereich der Achse des Kabels liegt, wenn der Linearvorschub für seitliche Verschiebung der Werkzeughalter dann nicht zu einer Verschiebung sondern zu einer Verschwenkung um diese Achse führt.

Weitere Bearbeitungsmöglichkeiten ergeben sich, wenn wenigstens ein Werkzeughalter Schleif- oder Polierscheiben aufweist, die durch oszillierende oder kreisende Bewegung der Messerhalter zu einem Abschleifen der Leiterenden verwendet werden können, was insbesondere bei Glasfaserkabeln von Bedeutung sein kann.

Eine erfindungsgemäss vorgesehene motorische Steuerbarkeit des Anpressdruckes bzw. des Abstandes der Vorschubrollen bzw. Vorschubbänder zueinander bringt den Vorteil, dass während des Abziehens der Anpressdruck auf das Kabel erhöht werden kann, um so einen Schlupf zu verhindern, bzw. um mehr Kraft auf das Kabel aufzubringen. Würde der Anpressdruck, wie im Stand der Technik bekannt, über den gesamten Vorgang aufrecht erhalten bleiben, hätte das den Nachteil, dass das Kabel bzw. sein Mantel über seine ganze Länge Quetschungen erleidet, die so höchstens an einem kleinen Bereich auftreten. Ausserdem wird erfindungsgemäss die Abnutzung des Riemens reduziert. Da der Abziehwiderstand am Anfang der Abziehbewegung in der Regel am grössten ist, kann erfindungsgemass der Anpressdruck über einen Abziehweg von z.B. 4mm erhöht und anschliessend wieder auf ein geringeres Mass gesenkt werden. Allfällige Markierungen bzw. Quetschungen sind sohin auf ca. 4mm beschränkt.

Als weiterer Erfindungsgedanke ist die individuelle Öffenbarkeit der Rollen bzw. Bänder zu sehen, das heisst, dass die Antriebseinheiten der Bänder sowohl vor als auch nach dem Werkzeughalter voneinander unabhängig geöffnet und geschlossen bzw. in ihrem Anpressdruck eingestellt werden können. Bevorzugt können die Rollen nicht nur im Anpressdruck eingestellt werden und mittels Elektromotor auf einen gewünschten Abstand zueinander gefahren werden, sondern sie können darüber hinaus gegebenenfalls auch vollstandig geöffnet werden. Das gekoppelte öffnen und Schliessen der beiden Rollen- bzw. Bandpaare mit einem einzigen Antriebsmotor und einem Drehteller ist per se bekannt aus einer 1989 veröffentlichten Maschine ATC 9000 der Sutter Electronic AG Thun, Schweiz, deren diesbezügliche Lehre als im Rahmen dieser Erfindung liegend geoffenbart gilt, wobei gegenüber dem Bekannten eine vollstandig unabhängige Öffenbarkeit der Rollen bzw. Bänder vorgesehen ist.

Ein weiterer Vorteil einer unabhängigen Öffenbarkeit des zweiten Rollen- bzw. Bandpaares von der Öffnung des ersten Rollen- bzw. Bandpaares ist, dass mit Hilfe des ersten Rollenpaares ein Vorabzug von z.B. 130mm durchgeführt werden kann, nachdem das Kabel in gewünschter Lange, z.B. 500mm, durch das zweite Rollenpaar bereits durch ist, so dass auch lange Abisolierlangen, z.B. für Netzkabel, erfolgreich abisoliert werden können. Denkbar ist auch, noch grössere Längen vorabzuziehen, wobei später von Hand der Rest der Isolation vom Leiter abgezogen wird.

Für einen längeren Vollabzug oder längeren Teilabzug könnten umgekehrt nach erfolgtem Vorabzug gemäss obiger Verfahrensangabe, der Anpressdruck des zweiten Rollen- bzw. Bandpaares erhöht und den Mantel unter Haftreibung durch Drehung in Abzugsrichtung vom Leiter abgezogen werden.

Wenn man ein langes Abisolierstück in wenigen Einzelschritten abisolieren will, kann man dies erfindungsgemäss dadurch durchführen, dass bei jedem Teilschritt das zweite Rollen- bzw. Bandpaar geöffnet wird. Gegenüber dem Bekannten (z.B. KODERA Type 36 mit einem besonders grossen Abstand zwischen den linken und rechten Vorschubrollen) hat man den Vorteil, auch kurze Kabelstücke abisolieren zu können. Gegenüber dem Bekannten (z.B. KODERA Type 34 mit einem begrenztem Abstand zwischen den linken und rechten Vorschubrollen) hat man andererseits den Vorteil einer nahezu beliebigen Abisolierlänge und ist überhaupt nicht eingeschränkt auf den Abstand zwischen Werkzeughalter und zweitem, axial dahinterliegenden Rollenpaar, der bisher bei allen bekannten Maschinen den Abisolierabstand begrenzt.

Erwähnenswert liegen im Rahmen der Erfindung auch Kombinationen zwischen den dargestellten Merkmalen bzw. einzelnen, voneinander unabhängig anwendbaren Erfindungsaspekten.

Anhand von beispielhaften Figuren, die für die unterschiedlichen Erfindungsaspekte nicht einschränkend sind, werden bevorzugte Ausführungsbeispiele dargestellt.
Die Figuren sind zusammenhängend und übergreifend beschrieben, da gleiche Bezugszeichen gleiche Bauteile und gleiche Bezugszeichen mit unterschiedliche Indizes ähnliche Bauteile mit gleichen oder ähnlichen Funktionen bedeuten.

Es zeigen dabei die
- Fig.1: eine Symboldarstellung einer neuen Vorrichtung in Schrägansicht
- Fig.2: eine Variante dazu mit gemeinsam geführten oberen und unteren Werkzeughaltern
- Fig.3: symbolische Beispiele unterschiedlicher Modulkonfi guration eines neuartigen Modulaufbaus einer Abisoliermaschine mit Rollenantrieb;
- Fig.4: symbolische Beispiele gemäss Fig.3 jedoch mit Band antrieb;
- Fig.5a;b: eine Serie von 8 unterschiedlichen Verfahrens schritten eines erfindungsgemässen Abisoliervorgangs an einem symbolisch dargestellten Aufbau mit neuartigen Schiebeführungen;
- Fig.6: ein Detail eines erfindungsgemassen Werkzeughalter vorschubs einer Variante
- Fig.7: einen Ausschnitt aus einer neuartigen Abisolierma schine mit Schiebeführungen gemäss Fig.5
- Fig.8: eine Variante mit grösserem Abstand zwischen vorderem und hinterem Endlosbandantrieb 12 mit Massangaben eines konkreten Ausführungsbeispiels, die um ca. ± 25-75% im Rahmen der Erfindung variier bar sind;
- Fig.9: eine Variante mit verkürztem Abstand und den sich daraus ergebenden Effekten mit Wertangaben, die um ca. ± 25-75% im Rahmen der Erfindung variierbar sind;
- Fig.10: eine Gruppe verschiedener bei der Erfindung optimal einsetzbarer Werkzeuge, für dem Fachmann bekannte unterschiedliche Anwendungen;
- Fig.11: den linken Teil einer Draufsicht einer Vorrichtung mit Bandantrieb 12(Grundriss von Fig. 13)und einem Schwenkantrieb für die Führung;
- Fig.12: den rechten Teil derselben Draufsicht;
- Fig.13: analog dazu den linken Teil einer nicht vollständi gen Ansicht mit abgenommenem oberen Band und mit einer schwenkbaren Kabelführung vor den Werkzeugen;
- Fig.14: eine Variante eines rechten Teils dieser Ansicht;
- Fig.15: eine Variante zu Fig.12 mit Rollenantrieb;
- Fig.16: erfindungsgemässe Verfahrensschritte zum Abisolieren grösserer Längen und die
- Fig.17: bis 20 symbolische Darstellungen zur Erläuterung eines erfindungsgemässen Verfahrens zur Programmierung der Steuerung.

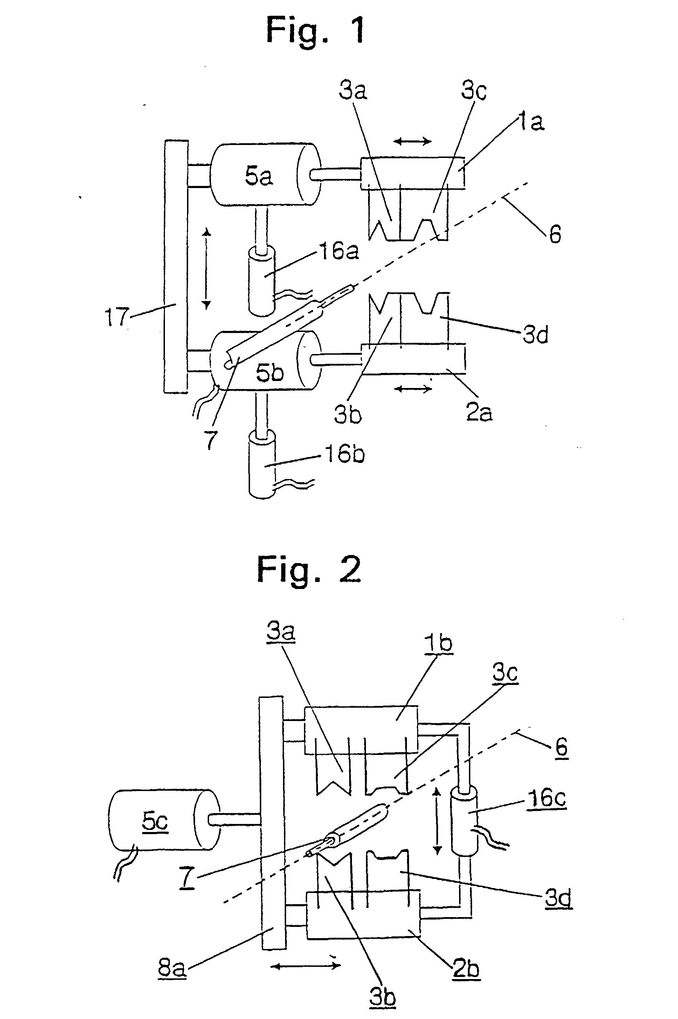

Fig.1 zeigt eine Symboldarstellung einer neuen erfindungsgemässen Vorrichtung in Schrägansicht mit Werkzeugträgern 1,2 und darauf gehaltenen Messern 3, von denen auch mehrere (mehr als die dargestellten 2 Paare) nebeneinander an vergrösserten Werkzeugträgern 1,2 angebracht sein können. Symbolisch dargestellte Antriebe 5a bzw. 5b treiben die Werkzeugträger seitlich in bezug auf die Achse 6 an. Symbolische Schliessantriebe 16a und 16b erlauben das Schliessen der Werkzeughalter 1,2 gemeinsam (über eine Steuerung) oder getrennt. Eine Führung 17 hält die Werkzeugträger bzw. -halter und die Antriebe parallel.

Fig.2 zeigt eine Variante dazu mit gemeinsam geführten oberen und unteren Werkzeughaltern 1,2 über einen Schliessantrieb 16c z.B. mittels Spindeltrieb und einem einzigen Seiten antrieb 5c. Diese vereinfachte Variante baut kleiner, ermöglicht jedoch - im Vergleich zur ersten - nur weniger Arbeitsschritte.

Beide obgenannten Figuren beziehen sich auf einen wichtigen Aspekt der Erfindung, nämlich die annähernd beliebige Bewegbarkeit wenigstens eines Kabelbearbeitungswerkzeuges, insbesondere eines Messers o.dgl. in einer Ebene etwa senkrecht auf die Kabelvorschubrichtung. Die Bewegbarkeit könnte bei Bedarf auch stufenlos sein.

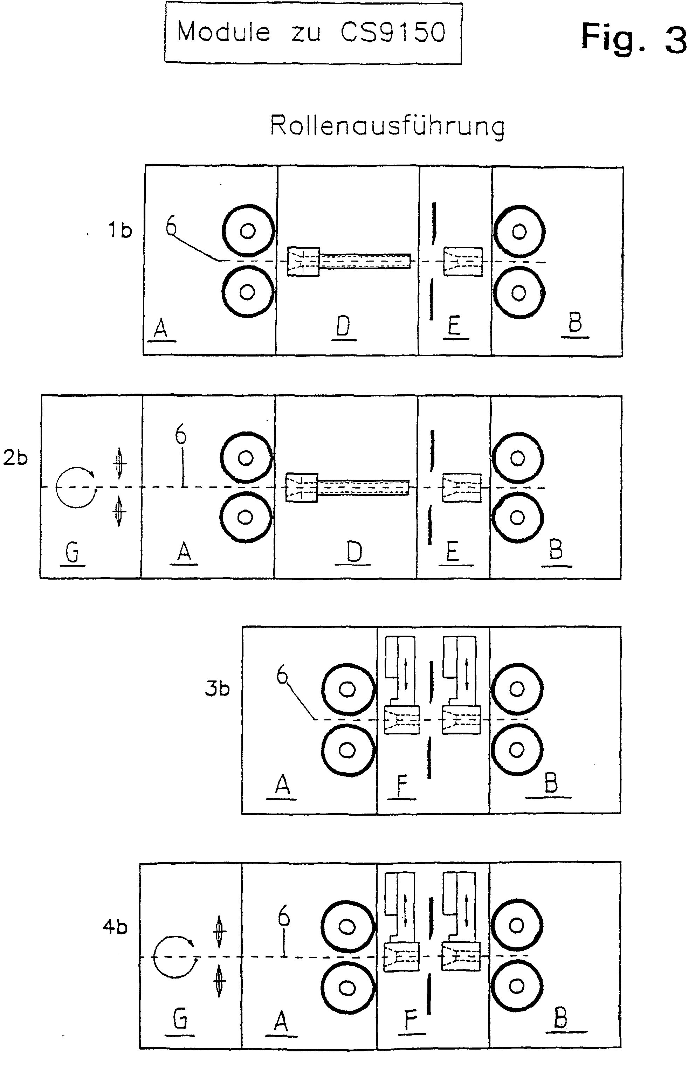

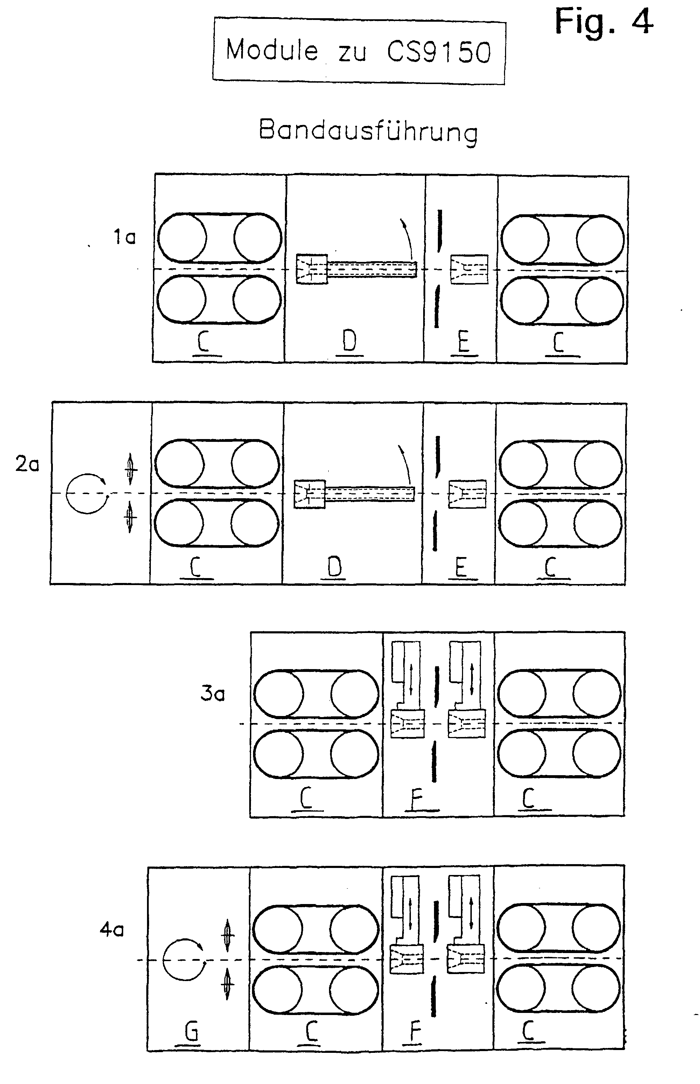

Fig.3 bezieht sich auf einen davon unabhängigen, jedoch bevorzugt bei obigen Kabelverarbeitungsmaschinen einsetzbaren neuen Aspekt eines modularen Aufbaus einer Abisoliermaschine. Die Beispiele 1b bis 4b zeigen dabei symbolisch Vorschubmodule A und B, die jedoch beispielsweise zum Teil auch ersetzt werden könnten durch Vorschubmodule wie einem Vorschubmodul C gemäss Fig.4, so dass sich z.B. ein Vorschubmodul A mit einem Vorschub Modul C ergänzt unter Entfall des Moduls B.

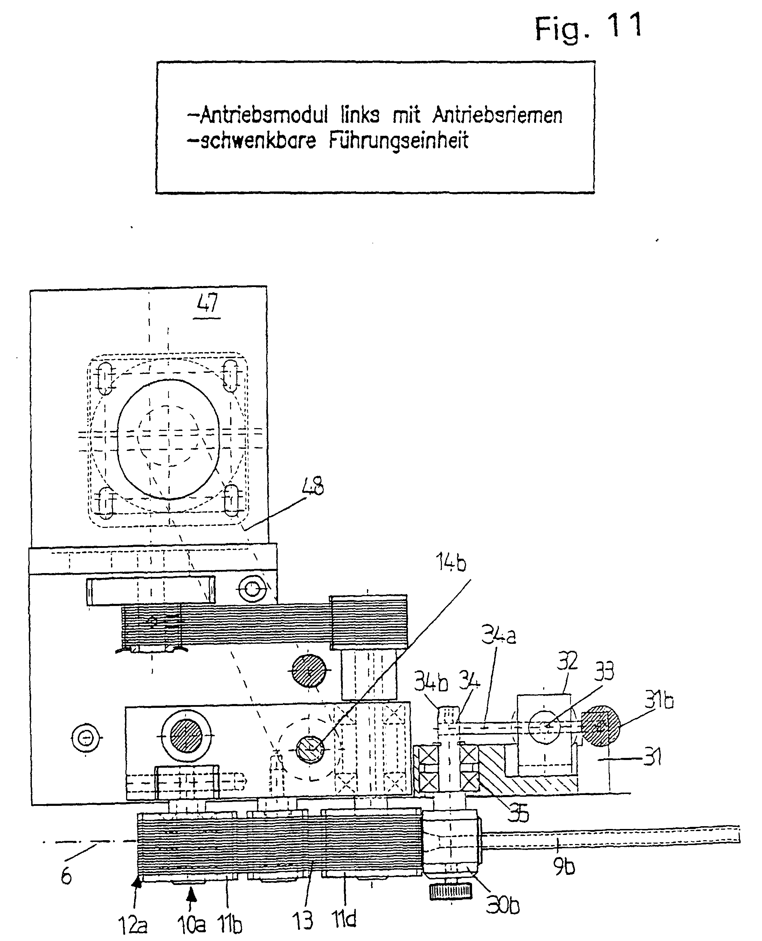

Ein weiters häufig zum Einsatz gelangendes Modul D mit schwenkbarem Führungsrohr kommt vor einem Schneide- bzw. Messermodul E zum Einsatz. Das Messermodul ist vorzugsweise so aufgebaut, wie in Fig. 1 oder 2 dargestellt, wobei bevorzugt eine weitere starre oder verschiebbare Führung angeordnet ist. Mit Fig.11 wird die Funktion des schwenkbaren Führungsrohres erläutert.

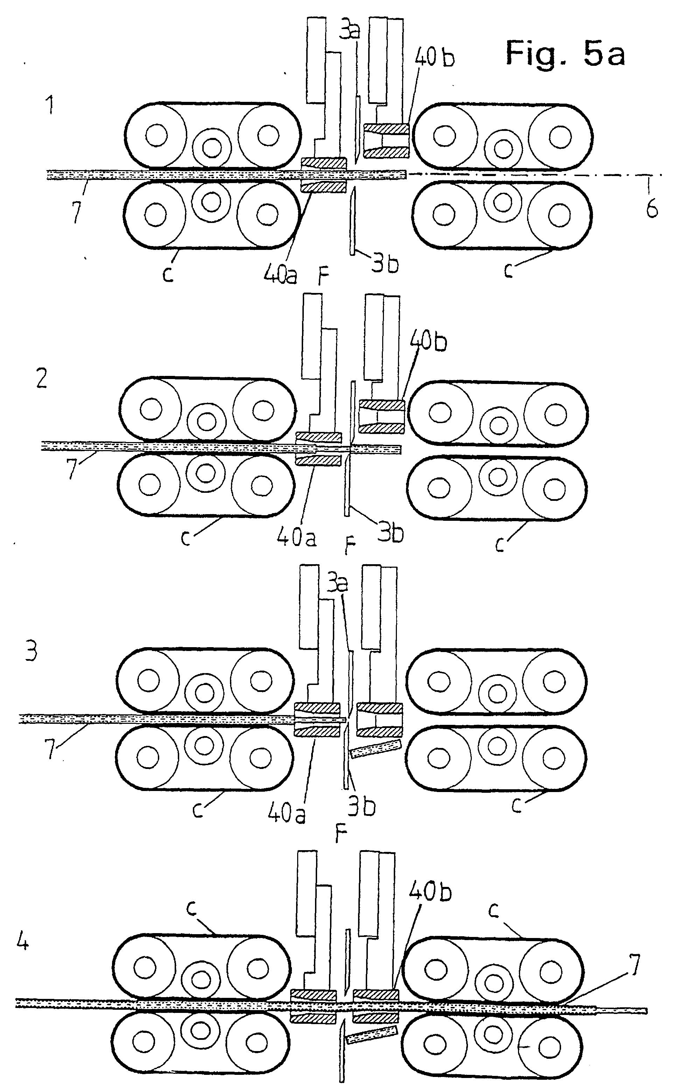

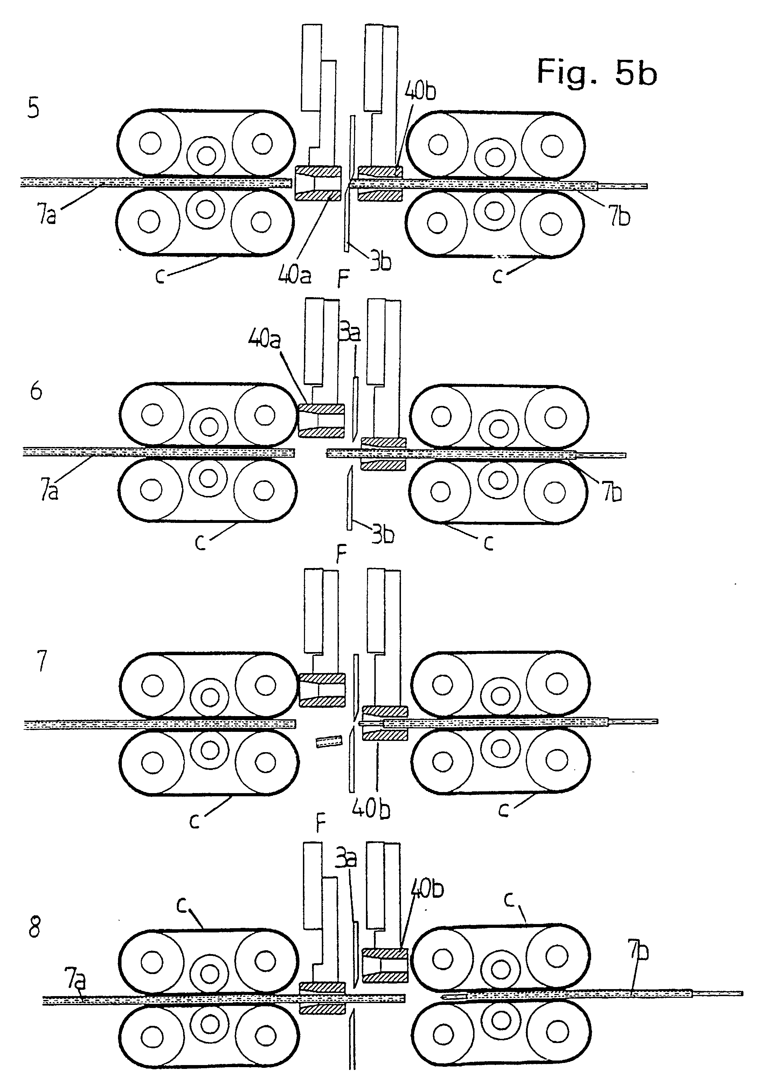

Modul D und E können, wie in den Beispielen 3b, 4b sowie 3a und 4a dargestellt, durch ein Modul F ersetzt worden, das wenigstens eine, vorzugsweise aber, wie dargestellt, zwei verschiebbare Führungen aufweist, die ein neues spezielles Abisolierverfahren ermöglichen, wie mit Fig. 5a und b erläutert wird.

Die Abisoliervorrichtung kann erfindungsgemäss durch beliebige weitere Module ergänzt werden, wobei als Beispiel ein Modul G eingezeichnet ist, das eine "Coax-Box" darstellt, nämlich eine rotativ wirkende Einschneidebox, wie sie insbesondere für Koaxialkabel zum Einsatz gelangen kann. Eine solchen Coax-Box ist beispielsweise durch die Schleuniger AG unter der Bezeichnung CA 9170 auf den Markt gebracht worden, weshalb auf deren Aufbau nicht näher einzugehen ist. Der Fachmann kann die diesbezügliche Lehre problemlos von dort übernehmen. Sie gilt somit als im Rahmen dieser Anmeldung liegend geoffenbart.

Entscheidend ist bei diesem unabhängigen Erfindungsaspekt, dass ein Grundaufbau angeboten wird, der es erlaubt in universeller Art und Weise den Abisolierbedürfnissen zu entsprechen. Der sich daraus ergebende Vorteil liegt zuerst in der Herstellung, da in der Fabrik die Module unabhängig von einander erzeugt und gelagert werden können. In zweiter Linie ergibt sich ein Vorteil beim Anwender, dessen Abisolierbedürfnisse sich gegebenenfalls mit der Zeit verändern. Mit dem Austausch der entsprechenden Module vor Ort kann die erfindungsgemässe Vorrichtung nachträglich adaptiert werden. Die technische Realisierung dieses Aspekts liegt in linearen Führungen im Grundgehäuse, die mit gegengleichen Führungen an den Modulen kooperieren, so dass die Module mit ihren Arbeitselementen zentrisch zur Kabelvorschubachse 6 zu liegen kommen. Dieses erlaubt im Vergleich zum Stand der Technik auch eine raschere Montage kompletter Abisolier- bzw. Kabelbearbeitungsvorrichtungen.

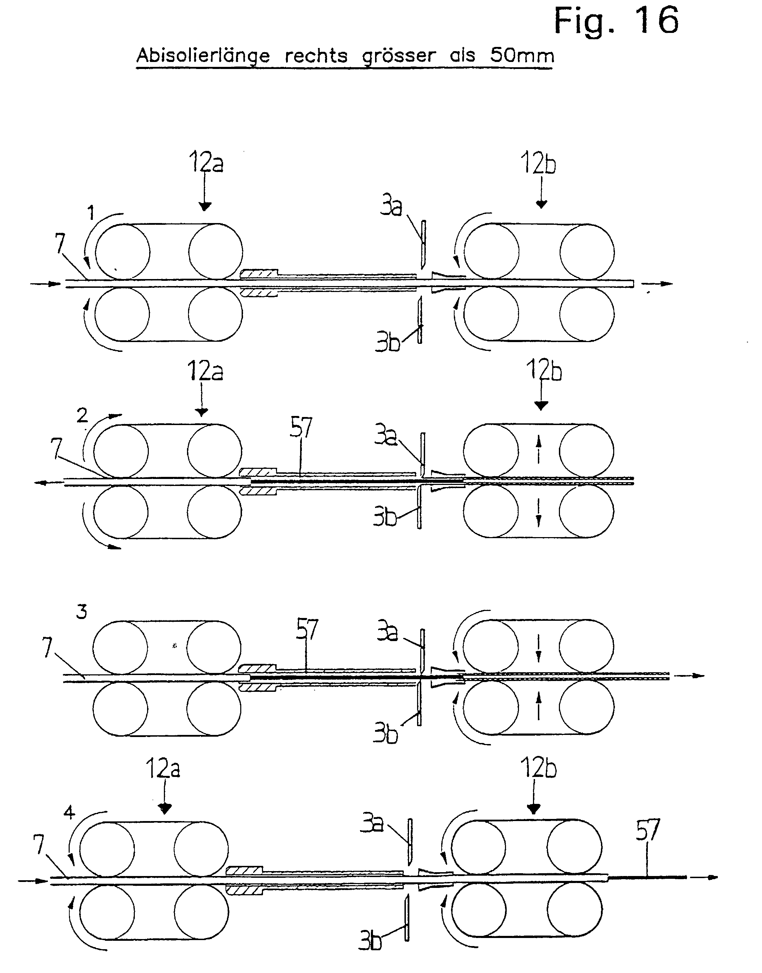

Die in Fig.5a und b gezeigten neuen und vorteilhaften Verfahrensstufen stellen einen dritten - gegebenenfalls auch unabhängig einsetzbaren Aspekt der vorliegenden Erfindung dar. Durch kurze - insbesondere linear -verschiebbare Führungshülsen 40a und b werden die Kabelendstücke jeweils vor dem Einschneiden oder Abisolieren durch die Messer 3a und b zentriert - vorteilhafterweise - in unmittelbarer Messernähe gehalten. Für nicht näher dargestellte Anwendungsfälle ist selbstverständlich im Rahmen der Erfindung auch der Verzicht auf eine der beiden Führungshülsen 40 möglich, insbesondere dann, wenn in der Folge der Band- oder Rollenvorschub näher an die Messer 3 herangerückt wird. Eine weitere Variation ergibt sich durch den möglichen Ersatz einer Führungshülse 40 mit einem Modul D, wie z.B. in Fig.16 angegeben. Der als Modul C symbolisch dargestellte Bandantrieb kann komplett oder partiell mit Rollenantrieben vertauscht werden.

Die Aspekte der Erfindung, die sich nicht unmittelbar auf die seitliche Verschiebbarkeit der Werkzeuge beziehen, gelten in erfinderischer Weise selbstverständlich auch für Messeranordnungen, bei denen mehrere Messer 3 entlang der Kabelachse (Vorschubachse) 6 versetzt angeordnet sind, wie z.B. im Abisoliermodell CCM 2000 der Sutter Electronic AG. Solche Kombinationen liessen gegebenenfalls die Verarbeitungsgeschwindigkeit von Kabeln durch die erfindungsgemässen Verfahrensschritte und verschiebbaren Führungshülsen noch steigern.

Im Rahmen eines alternativen Aufbaus können dementsprechend - insbesondere unter Ausnutzung des Modulaspekts auch mehrere Messermodule F mit seitlich verschiebbaren Messern hinter einander vorgesehen sein. Varianten mit dazwischen angeordneten zusätzlichen Vorschubmodulen A,B oder C liegen ebenso im Rahmen der Erfindung.

Die Erfindung betrifft weiters eine neuartige Mess- und Justiervorrichtung für motorisch zusammenfahrbare Backen, insbesondere Schneidebacken an einer Abisoliermaschine. Das Neue ist die Ausnützung einer gewissen Elastizität zwischen Antriebsmotor und einer Vortriebsspindel, die für den Vorschub der Backen zuständig ist. Die Elastizität kommt durch ein elastische Kopplungsglied zwischen Antriebsmotor und Spindel zustande, insbesondere ein Zahnriemen, der über Riemenscheiben das Drehmoment des Antriebes auf die Spindel überträgt. Neu ist weiters, dass an der Spindel direkt ein Messwertaufnehmer, insbesondere ein Encoder (Drehgeber) angebracht ist. Beim Zusammenfahren der Backen wird dem Encoder der Anschlag der Backen dadurch signalisiert, dass die Backen sich nicht mehr weiter zusammen bewegen und die definitive Anschlagstellung somit am Encoder abgelesen oder abgegriffen - bzw. ein Reset signalisiert werden kann. Der Antriebsmotor, z.B. ein Schrittmotor, kann erfindungsgemäss infolge der Elastizität jedoch geringfügig weiter gegen die Elastizität des Zahnriemens drehen - und sei es nur, seinen Schwung abzufedern, ohne die Backen mechanisch zu belasten.

Auch aus der Tatsache, dass der eine Messwertaufnehmer (an der Spindel) zum Stillstand gekommen ist und der andere (z.B. Schrittmotor) noch geringfügig weiterdrehen kann, kann erfindungsgemäss auf die Schliessposition der Backen geschlossen werden. In Ergänzung oder als Alternative ist im Rahmen der Erfindung denkbar, das Drehmoment des Antriebsmotors in Schliessnähe zu reduzieren, um die mechanische Belastung an den Schliessbacken zu reduzieren.

Ein erfindungsgemässer, optionale Zwischenschritt beim Abziehens unter Zuhilfenahme der rechten Bändern mit gesteuertem Anpressdruck führt vorteilhafterweise zu einem Vollabzug langer Isolierstücke mit dem Vorteil, dass ein Überspringen der Abisoliermesser bei starken Haftkräften zwischen Leiter und Isolierung reduziert wird. Dieses ist jedoch nur bei dünnen Kabeln ein Problem, bei stärkeren und vor allem stärkeren Isolationsdicken kommt es beim Bekannten in der Regel sonst zu einem Blockieren des linken Bandantriebes oder zu einem Schlupf, der wiederum zu einer Zerstörung der Kabel oder der linken Bänder führen kann.

Die völlig individuelle Einstellbarkeit und Ansteuerbarkeit der vorderen und hinteren Rollen bzw. Bändern erleichtert die Weiterverarbeitung des Kabels, erfordert allerdings auch ausreichend dimensionierte Antriebsmotore und eine geeignete Software, die nach Kenntnis dieser Patentanmeldung einem Durchschnittsfachmann verständlich und realisierbar wird.

Die bevorzugten Verfahrensschritte gemäss den Schritten 1 bis 8 sind dadurch gekennzeichnet:
1 Einschub des Kabels 7 auf seine vordere Abisolierlänge hinter die Messer 3; Freistellung der hinteren Führungshülse 40b.
2 Schliessen der Messer 3 bis zur Abisoliertiefe und Rückzug des Kabels 7 mittels vorderem Modul C.
3 Positionierung der hinteren Führungshülse 40b, die dabei gleichzeitig - bei Bedarf - das Abfall-Isolationsstück ausstösst, so dass es zu keiner Behinderung im weiteren Ablauf kommt. Gerade dieser Vorgang ist besonders vorteilhaft gegenüber bekannten Lösungen der Firma Eubanks, die zweiteilige Führungshülsen anbietet, die zum Zwecke der Abfallentfernung öffnen und mittels zusätzlicher Mechanik den Abfall ausstossen sollen. Da diese bekannten Aufbauten jedoch danach wieder schliessen, kann es erst recht zu einem Verklemmen von Abfallresten zwischen den Führungshülsenteilen kommen, was erfindungsgemäss entfällt. Als Lösung wurde bei einem anderen Stand der Technik vorgesehen, die Hülsen nach unten offen auszubilden, so dass Abzugsmaterial nach unten herausfallen kann. Der Nachteil bei dieser Konstruktion ist, dass Kabel, insbesondere dünne, flexible, an deren Unterseite nicht geführt sind und es daher zu Störungen beim Betrieb kommen kann. Solche Führungen sind z.B. bei dem Abisoliermodell der Firma Kodera/JP "Kodera 34" geoffenbart.
4 Vorschub des Kabels 7 bis zur Schnittposition unter den Messern 3. Im Falle eines Aufbaus gemäss Fig. 1 oder 2, der für die Anwendung dieses neuen Verfahrens nicht obligatorisch ist, sind die Abisoliermesser 3 und die Trennmesser 3 nebeneinander an den verschiebbaren Messerträgern 1 angeordnet, so dass zwischen Schritt 4 und 5 die Trennmesser 3 in Schnittposition geschoben werden, während in den übrigen Schritten die Abisoliermesser 3 in der dargestellten Position sind.
5 Das Kabel 7 wird durchtrennt.
6 Das zweite Kabelstück 7b wird mittels dem hinteren Vorschubmodul C zurückgeschoben bis zur Abisolierposition des hinteren Kabelendes; die vordere Führungshülse 40a ist freigestellt. Letzteres hat u.a. auch den Effekt, dass ein längeres Kabelendstück abisoliert werden kann, das die Länge zwischen vorderem Modul c und Messer 3 übersteigt. Dieses Kabelendstück kann nämlich - sofern es flexibel genug ist - abgebogen werden, da es durch die vordere Führungshülse 40a seitlich nicht geführt ist. Der selbe Effekt kann bei Bedarf beim Schritt 1-2 auch beim vorderen Kabelende und der Führungshülse 40b ausgenützt werden.
7 Einschneiden und Abziehen des Isolationsstückes (Kabelmantelabfall oder "Slug").
8 Auswurf des beidseitig abisolierten Kabelstückes 7b und Vorschub des nächsten Kabelstückes 7a gemäss Schritt 1.

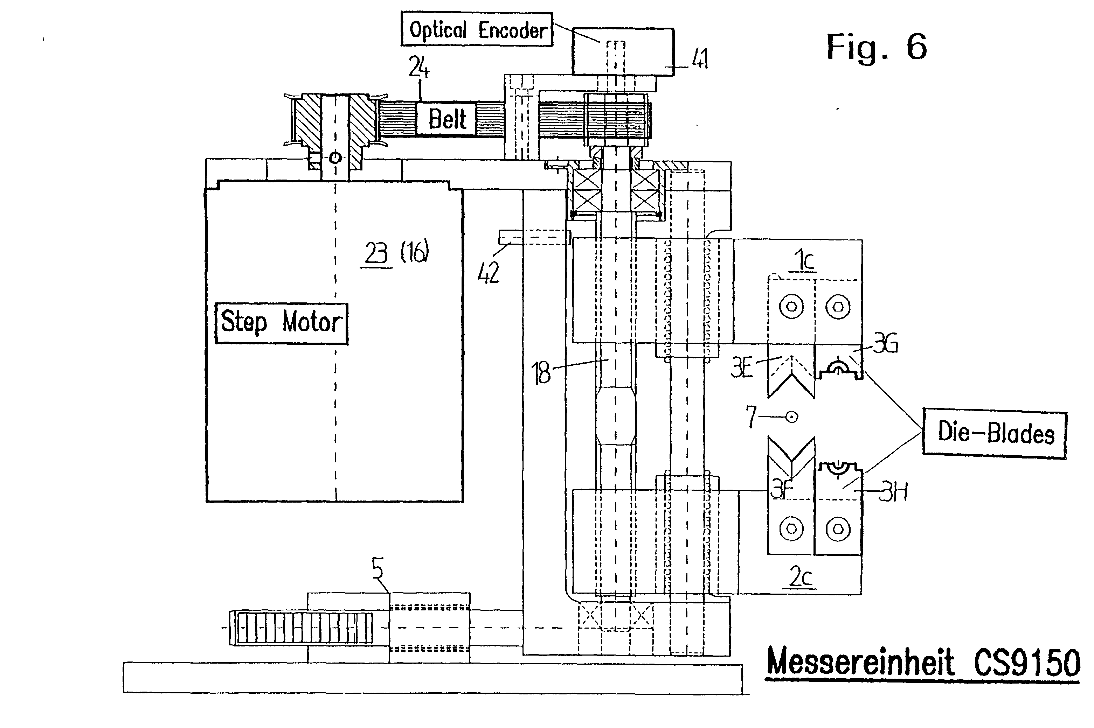

Fig.6 zeigt ein Detail eines erfindungsgemässen Werkzeughaltervorschubs (z.B. Modul E oder F) einer Variante gemäss Fig.2 mit einer Gewindespindel 18, einem Zahnriemenantrieb 24 und dem Schrittmotor 23 zum gesteuerten Antrieb der Schliess- und öffnungsbewegung der Werkzeuge und einem schematisch angedeuteten Antrieb 5 zum Seitverschieben der Messerhalter 1 und 2. Hinsichtlich der Abisolierschritte 4 und 5 gemäss Fig. 5 kommt das Messerpaar 3e und f zum Einsatz, während die Formmesser 3g und h lediglich die Isolation einschneiden und abziehen. Diese Formmesser 3g und h sind vorzugsweise so kompatibel, dass sie sich gegeneinander abstützen und ein Überschneiden dadurch unmöglich ist.

Diese Kompatibilität, wie sie auch schon bei anderen bekannten Abisoliermaschinen bekannt ist, führt zu einem Problem der Justierung, das gemäss einem weiteren, von den übrigen unabhängigen Aspekt der Erfindung erfindungsgemäss gelöst wird. Bei ungenauer Einstellung des Antriebes mit dem Motor 23 bzw. bei unterschiedlichen Messereinbauten an den Messerhaltern 1 und 2 kann es infolge der Motorkraft zu unerwünschten Kräften an der Spindel 18 bzw. den Messerhaltern 1 und 2 kommen, wenn nämlich der Motor 23 bei Anliegen der Messer 3g und h noch weiter Drehmoment aufbringt.

Vermieden wird dieses Problem durch eine Drehwinkelgeber (Encoder) 41 direkt an der Spindel 18. Der Encoder hat zusammen mit einer nicht näher dargestellten Steuerung die Aufgabe, die Drehbewegung der Spindel 18 in Abhängigkeit von der Antriebs bzw. Drehleistung des Motors 23 zu überwachen. Bringt der Motor weiter Drehmoment auf, ohne dass sich die Spindel 18 dreht (keine Änderung des Encoderwertes), erkennt die Steuerung selbsttätig, dass die Messer 3g und h auf Anschlag sind. Die Elastizität des Zahnriemens 24 erlaubt dabei ein gewisses Spiel, das mechanische Überlast an der Spindel vermeidet. Bei einer speziellen Ausführung wird auch der Encoder des Motors 24 - z.B. ein Schrittmotor - zum Vergleich mit dem Encoder 41 benutzt, um die geschlossene Messerstellung zu detektieren. Ein - z.B. induktiver - Initialgeber 42 kann dabei vorgesehen sein, um die offene Position der Messerhalter 1 und 2 zu detektieren.

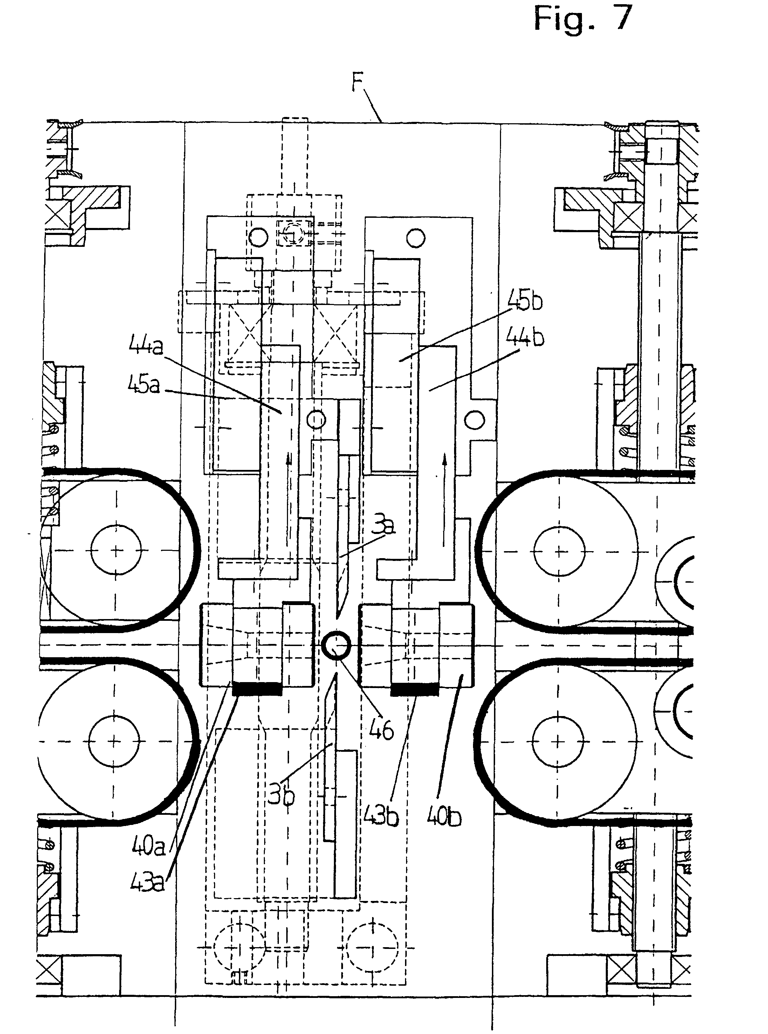

In Fig.7 ist ein Modul F beispielhaft näher dargestellt. Bevorzugt sind die Führungshülsen 40 in Schnappverschlüssen 43 an Führungsstangen 44 gehalten, die rechnergesteuert durch - in diesem Beispiel pneumatische - Antriebe 45 gehoben oder gesenkt werden können. Die Schnappverschlüsse ermöglichen erfindungsgemäss ein rasches Wechseln von Führungshülsen 40, um diese an unterschiedliche Kabel anzupassen. Die Führungshülsen 40 sind in ihrem Inneren an einer oder beiden Seiten zur Kabeleinführerleichterung bevorzugt trichterförmig angesenkt. Für bestimmte Anwendungen können sie, wie schon oben erwähnt, mit herkömmlichen Schwenkführungen ersetzt oder auch ganz weggelassen werden. Sie können erfindungsgemäss auch bei beliebigen anderen Abisoliermaschinen erfolgreich eingesetzt werden; z.B. auch bei herkömmlichen rotativen Abisoliervorrichtungen, anstelle von mitrotierenden Zentrierbacken, wie z.B. in den Modellen 207 der Schleuniger Productronic AG oder den zwischenzeitlich vom Markt genommenen Modellen 9200 der Firma Eubanks Monrovia USA. Zwischen den Führungshülsen 40 befinden sich die Messer 3 bzw. Kabelbearbeitungswerkzeuge, sowie gegebenenfalls eine Pressluftausblasöffnung 46 zum Reinigen der Werkzeuge.

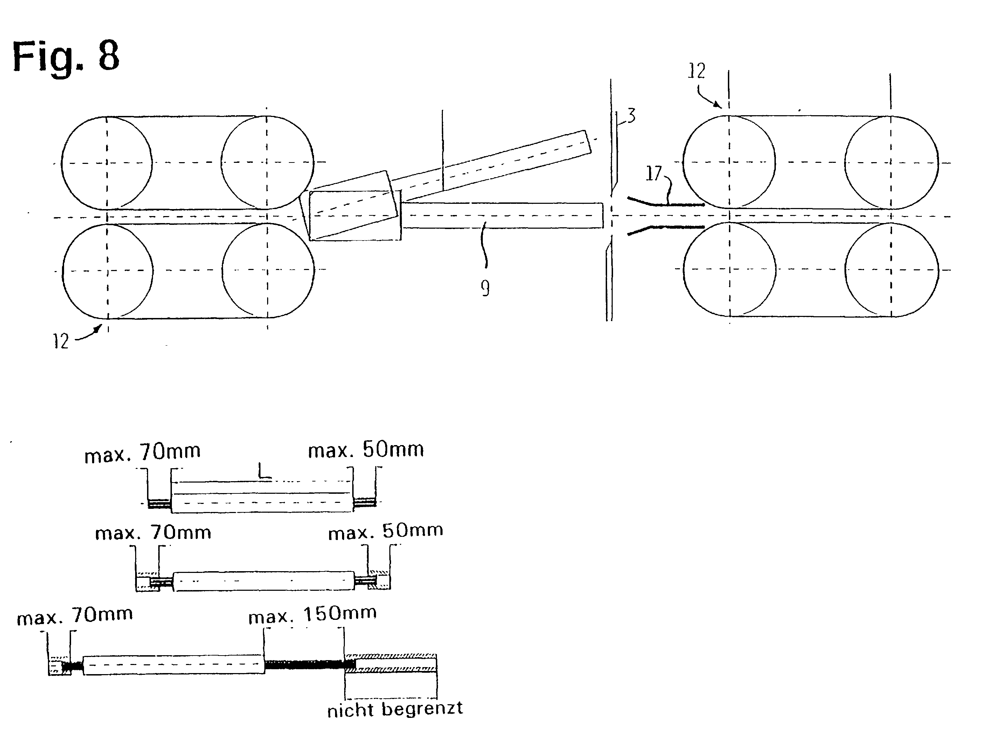

Fig.8 zeigt eine Variante gemäss Modulaufbau 1a (Fig.4) mit grösserem Abstand zwischen vorderem und hinterem Endlosbandantrieb 12 mit Massangaben eines konkreten Ausführungsbeispiels, die um ca. ± 25-75% im Rahmen der Erfindung variierbar sind. Die schwenkbare Führung 9 ermöglicht dabei lange hintere Abisolierstücke, da beim Zurückschieben eines vorderen Kabelabschnittes die Führung 9 nach oben schwenkt und derart den Weg für das hintere Ende des vorderen Kabelabschnittes wenigstens bis zur Länge der schwenkbaren Führung 9 freigibt. Der schwenkbaren Führung 9 ist eine Führung 17 gegenübergestellt, die eventuell lediglich aus einem planen Führungsstück zur Horizontalführung eines Kabels bestehen kann, die jedoch auch verschiebbar sein kann, wie oben beschrieben oder auch starr jedoch austauschbar ausgebildet sein kann, wobei hierfür erfindungsgemäss auch die oben erwähnten Schnappbefestigungen vorteilhaft sind. Die Länge dieser Führungsstücke bzw. der Abstand zwischen den Messern und den Band- oder Rollenantrieben ist ausschlaggebend für die geringste verarbeitbare Kabellänge.

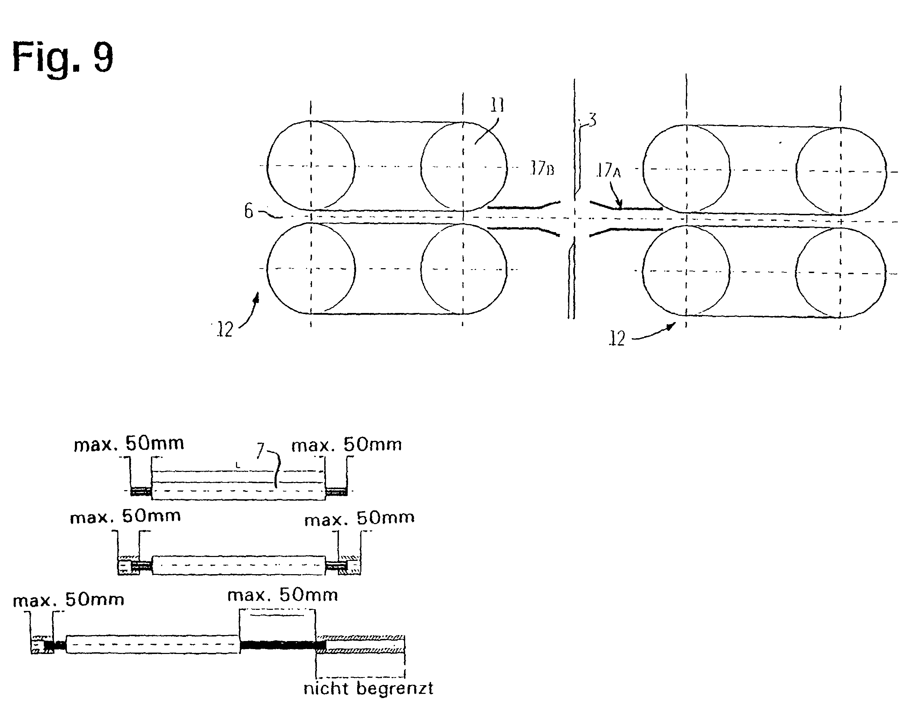

Fig.9 zeigt demgegenüber eine Variante mit verkürztem Abstand, wie z.B. Modulaufbau 3a (Fig.4) und den sich daraus ergebenden Effekten mit Wertangaben, die um ca. ± 25-75% im Rahmen der Erfindung variierbar sind; Selbstverständlich sind die Bandantriebe 12 bei beiden Varianten durch Rollenantriebe 11 ersetzbar.

Bei einem besonderen, neuen, auch unabhängig einsetzbaren erfinderischen Aspekt können die Bandantriebe 12 jedoch auch zum Abziehen der durchtrennten Kabelmantelstücke eingesetzt werden, wobei durch die erfindungsgemässe Anpressdrucksteuerung der Bandantriebe 12 in Abhängigkeit vom Kabelaufbau bei geschlossenen Abisoliermessern, die das Kabel somit halten, die jeweiligen Bänder - in der Regel wird dies des hintere Bandpaar sein - den Kabelmantel in Abzugsrichtung weiterfördern. In einer besonderen Variante können dabei auch die vorderen Bänder in Gegenrichtung laufen und derart mithelfen, in kürzerer Zeit den Leiter aus dem Mantel zu ziehen.

Als weitere Verfahrensvarianten sind erfindungsgemäss Teilabzüge möglich mit anschliessendem Vollabzug mit Hilfe der Bandantriebe, wie eben beschrieben.

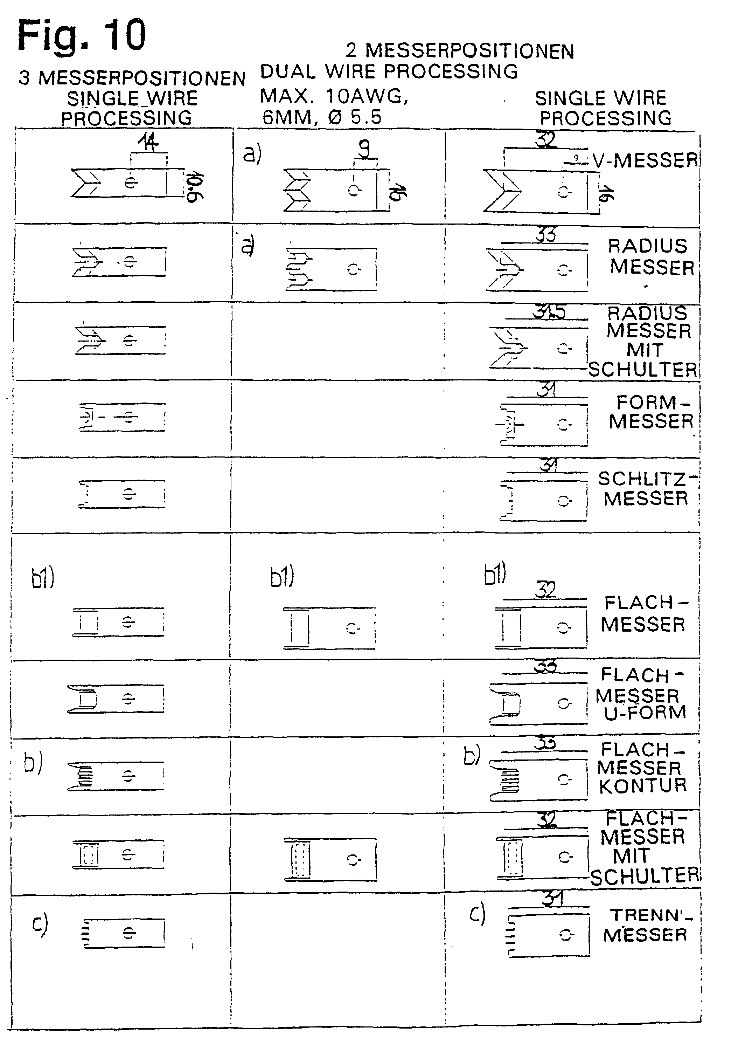

Die Funktionsweisen der Messerausbildungen gemäss Fig.10 sind im wesentlichen dem Fachmann bekannt; besonders herausgehoben werden daher nur die Aufbauten a-c:

Bei besonderen Aufbauten a) können mit der erfindungsgemässen Vorrichtung parallel auch mehrere Kabel verarbeitet werden, was zu einer grösseren Effektivität führt. Erfindungsgemäss sind dazu dann auch parallele Führungen 40 oder Schwenkführungen 9 vorgesehen.

Der besondere Aufbau gemäss b) dient dem Abisolieren von Flachbandkabeln, die im Rahmen der Erfindung ebenso verarbeitet werden können. Hierzu werden zum Durchtrennen bevorzugt die Flachmesser gemäss b1) verwendet.

Die Variante mit den Messern c) dient ebenso den Flachbandkabeln, wobei letztere damit auch aufgetrennt werden können.

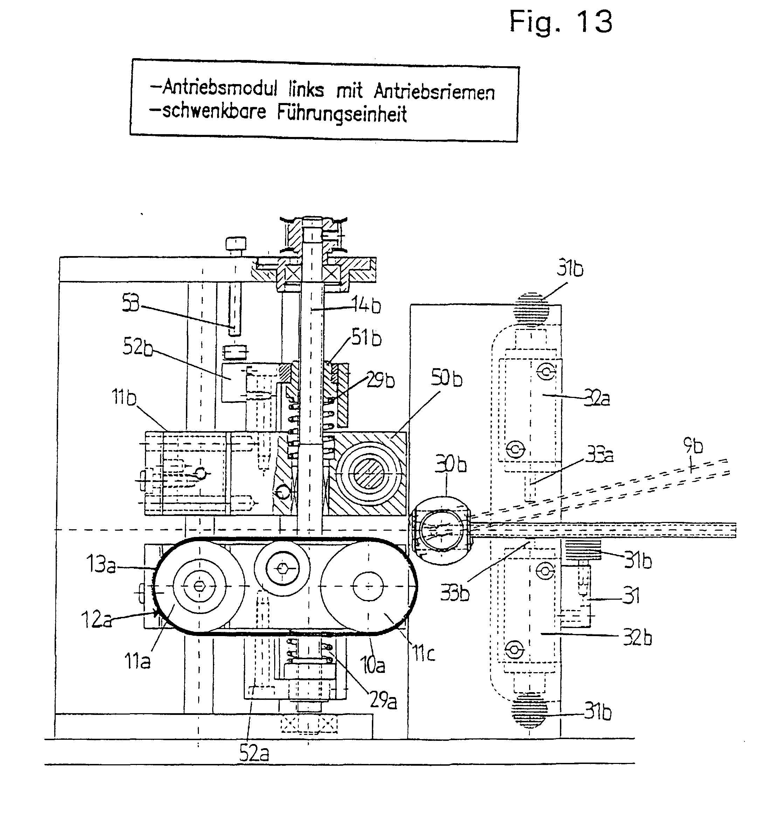

Die Draufsicht gemäss Fig. 11 ist kompatibel zur Ansicht gemäss Fig.13. Ein vorderer Bandantrieb 12a mit seinen Antriebsrollen 11b und d fördert ein Kabel entlang der Achse 6 zur verschwenkbaren Führung 9. Diese verfügt über ein Führungsrohr 9b, das auswechselbar in einem Schwenkkörper 30b gehalten ist. Der Schwenkkörper 30b ist mit einer Kurbelstange 34 verbunden, die die Schwenkbewegung vom Antrieb 33 auf das Rohr 9b überträgt, während dem Schwenkkörper 30 bzw. der Kurbelstange 34 eine Anschlag 31 mit Gummipuffer 31b zur Abdämpfung zugeordnet ist, da bevorzugt die Längsführung 9 mittels schnellwirkenden Verschiebemagneten 32 angetrieben wird, der mit seinem Stössel 33, der gegebenenfalls ebenso mittels Gummipuffer abgedämpft ist, die Führung 9 schlagartig beschleunigt.

Die Kurbelstange ist bei vorliegenden Ausführungsbeispiel zweiteilig ausgebildet, wobei ein Zylinderstift 34a in einer Drehwelle 34b und die wiederum in einem Lager 35 gehalten und mit dem Schwenkkörper 30b verbunden ist. Bei Bedarf kann diese Schwenkführung auch federbelastet sein und/oder um die Achse 6 um 90 oder 180 Grad gedreht angeordnet sein, so dass die Führung 9 nicht nach oben, sondern seitlich oder nach unten ausschwenkt.

47 bezeichnet einen Verstellantrieb für den Bandantrieb 12, der über einen Riemen 48 die Spindel 14b dreht.

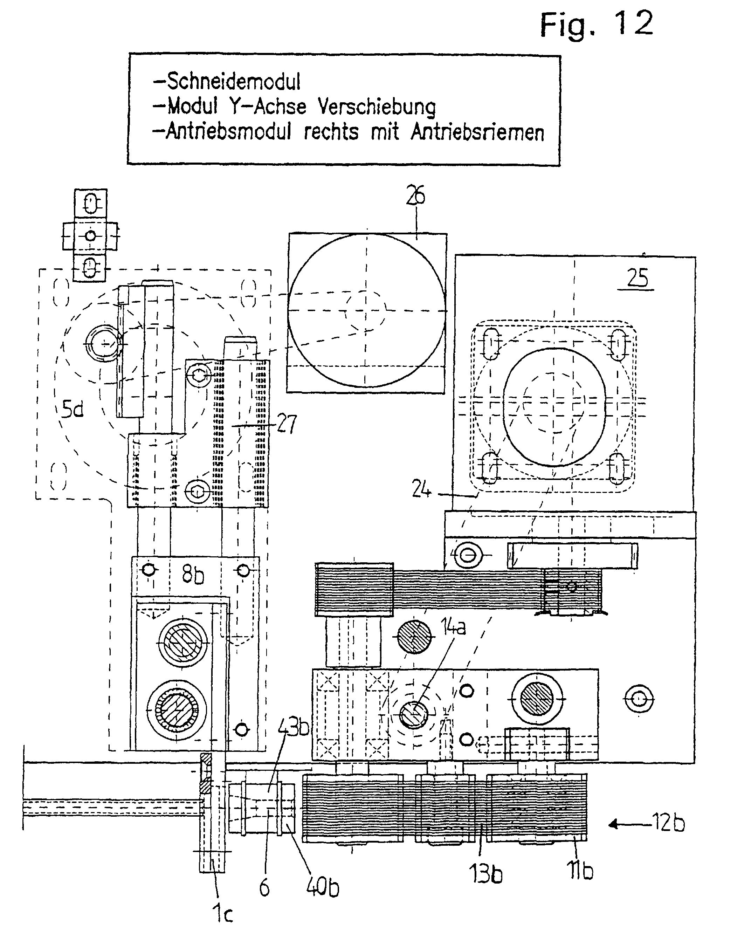

Fig.12 zeigt den rechten Teil desselben Ausführungsbeispiels, wobei 25 den Antrieb und 24 den Riemen für die Einstellung der Spannkraft des Endlosbandantriebes darstellt und mit 26 der gesteuerte (Schritt)motor bezeichnet ist, der das gesteuerte Seitführen der Werkzeughalter 1,2 in den Linearführungen 27 ermöglicht.

Die Führung 40b ist bei dieser Ausführungsvariante nicht verschiebbar, jedoch mittels Schnappverschluss 43b leicht entfernbar gehalten. Ein gemeinsamer, mittels Antrieb 5d verschiebbarer Halteteil 8b trägt die Werkzeughalter 1.

Aus Fig.13 ist ein Detail des Bandantriebes 12a für die neue Vorrichtung mit einem Endlosbandpaar 12 mit Bändern (Zahnriemen) 13, Rollen (Zahnrollen)11a,c und Andrückrollen zu sehen. Die oberen und unteren Bänder sind voneinander vollständig separierbar. Der Anpressdruck zwischen den Bändern 13 steuert sich über die Druckfeder 29, die den Antriebsrollenhaltekörper 50 in Schliessrichtung vorspannt. Die Vorspannung wird erhöht, indem bei sich berührenden oberen und unteren Bändern 13 die Spindel 14b weiter in Schliessrichtung gedreht wird, so dass die Stellmutter 51b die Feder 29 weiter komprimiert. Beim Öffnen der Bandantriebe, z.B. für eine Voröffnung zur Vermeidung des verletzenden Anstossens eines Kabels an die Bänder 13, nimmt die Stellmutter 51b den Antriebsrollenhaltekörper 50b über den Mitnahmeteil 52b mit.

Die Öffnungsbewegung ist mittels justierbarem Anschlag 53 begrenzt. In dieser Position wird vorzugsweise gleichzeitig die Schliessbewegung initialisiert. Die Steuerung erfolgt dabei entweder über einen nicht gezeigten Drehencoder an der Welle 14b oder über den gesteuerten Antrieb 47 gem. Fig.11.

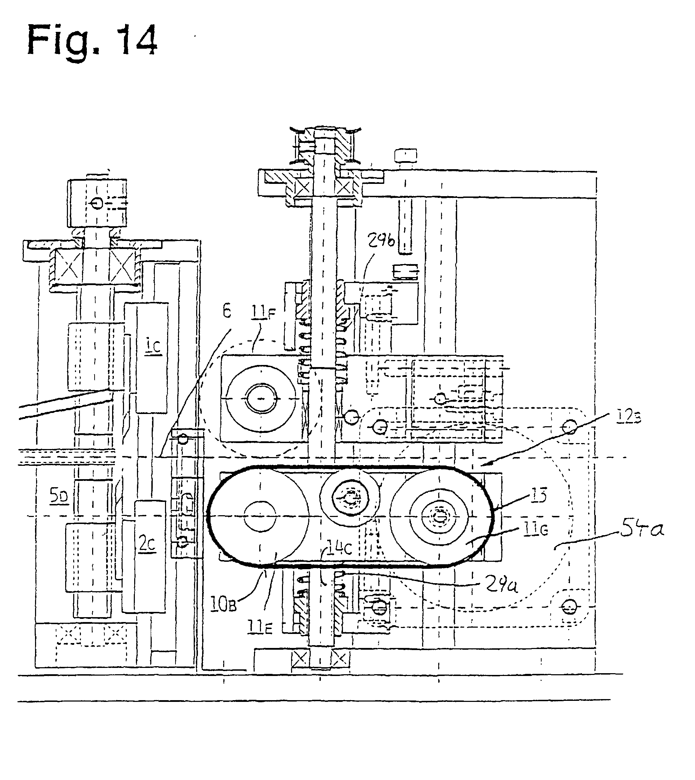

In der Variante gemäss Fig.14 ist der Antriebsmotor 54 für den Bandantrieb strichliert dargestellt, der bevorzugt ebenso encodergesteuert ist, da er die Abisolierlängen mitbestimmt.

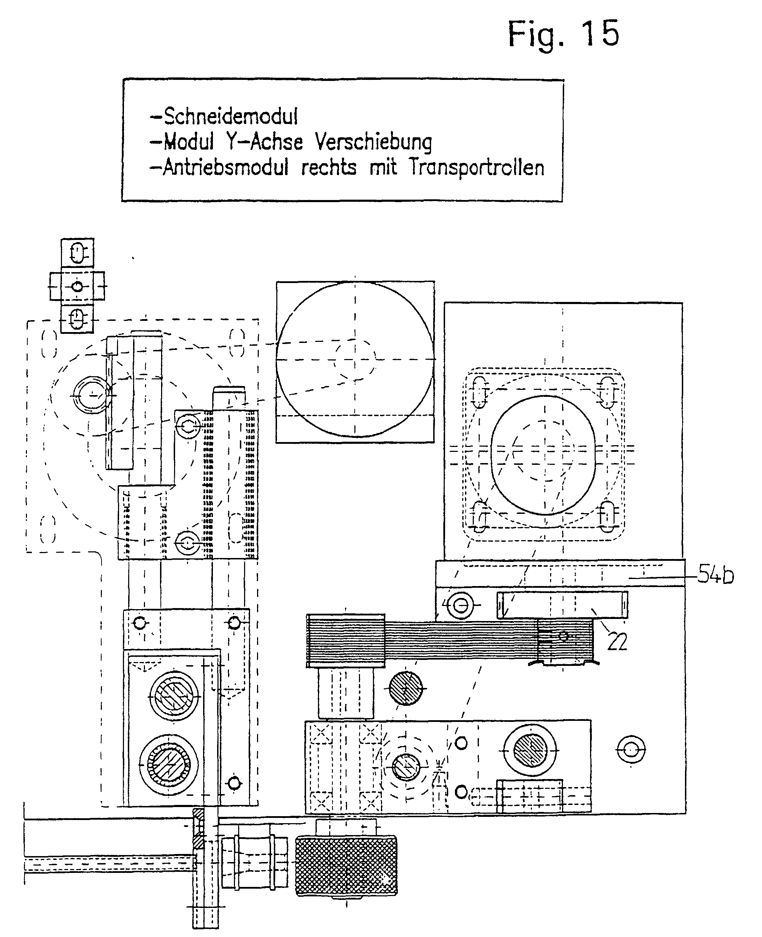

Fig.15 zeigt eine Variante zu Fig.12 mit einem Rollenantrieb mit Rollen 11, die über ein Getriebe 22 bzw. 21 von einem Antrieb 54b angetrieben sind. Die Öffnungsverstellung der Rollen entspricht jener der Bandantriebe 12.

Fig.16 bezieht sich auf ein weiteres neues und erfinderisches Verfahren zum Abisolieren von Kabeln, das bevorzugt mit den oben beschriebenen Aufbauten, aber auch mit anderen bekannten Maschinen neu durchgeführt werden könnte. In vier Verfahrensschritten wird ein Kabel 7 mit einem besonders langen Abisolierstück abisoliert:
1 Einschieben das Kabels 7 durch Antriebsrotation der Bandantriebe 12 bis zur Abisolierposition unter den Messern 3.
2 Öffnen des rechten Bandantriebes 12b bis auf den Kabeldurchmesser, so dass das Kabel gerade noch zentriert gehalten wird, jedoch ohne einen Anpressdruck auf dieses auszuüben. Gleichzeitig Einschneiden der Messer 3 auf die Abisoliertiefe; Rückzug des Kabels 7 durch Rückzugsrotation des Bandantriebes 12a bis etwa zu der Position, in der dieser Bandantrieb 12a noch nicht den blanken Leiter 57 berührt. Dieses wäre eine Abisolierlänge, die bisher nur mit aufwendigen Teilabzugsschritten erzielt werden konnte.
3 Klemmung des Kabels 7 durch den Bandantrieb 12a und Abziehrotation des Bandantriebes 12b unter geeignetem Anpressdruck auf den Kabelmantel, so dass dieser vom Leiter 57 vollständig abgezogen wird. Gegenüber dem Bekannten ist somit neu auch ein Vollabzug mit einer dargestellten Abisolierlänge möglich.
4 Der Fachmann erkennt, dass weitere Schritte möglich wären.

Weitere Details und Varianten der Erfindung sind in den Patentansprüchen beschrieben bzw. unter Schutz gestellt.

Ein besonderes Verfahren zum Ansteuern der oben beschriebenen Abisoliervorrichtungen bzw. auch andere Abisoliervorrichtungen, die nicht unter den Geltungsbereich der obigen Ausführungen fallen, ist ebenfalls Gegenstand dieser Anmeldung.

Dem Verfahren liegt die Aufgabe zugrunde, an sich bekannte Verfahren zur Ansteuerung von Abisoliervorrichtungen zu verbessern, insbesondere zu beschleunigen, so dass interne Abläufe optimiert und gewisse Funktionen automatisiert und gegebenenfalls die Eingabe noch erleichtert wird.

Bekannte Verfahren zur Ansteuerung verfügen über eine Software, die für die Verarbeitung spezieller Kabel (z.B. Koaxkabel) die Möglichkeit bot, jede einzelne Operation, d.h. jeden Verfahrensschritt, jedes einzelne Vorschieben oder Zurückziehen z.B. des Kabels oder der Messer, jedes Schwenken eines schwenkbaren Kabelführungsteiles etc. von Hand einzugeben, die Software somit so zu programmieren, dass sie danach die Maschine entsprechend ansteuerte. Dies erforderte für jede neue Detail-Aufgabenstellung bei der Abisolierung eines speziellen Kabels ein "komplettes" Programmieren des ganzen Abisoliervorganges. Dieses ist zeitaufwendig und kann auch infolge Irrtümer fehlerbehaftet sein.

Die vorliegende Erfindung löst dieses Problem erstmals befriedigend durch das Einführen von Operationsgruppen, die Verfahrensschritte zusammenfassen und selbsttätig gewisse Einstellungen gruppenweise vornehmen. Jede Verfahrens-(schritt-)gruppe löst eine häufig gebrauchte Aufgabe, die aus mehreren einzelnen Verfahrensschritten besteht, z.B. das sukzessive Einschneiden und Vorschieben eines dreistufigen Kabels an einer Seite mit einstellbaren Abisoliertiefen.

Gemäss einer Weiterentwicklung dieses Verfahrens sind die einzelnen Verfahrensschritte in einer Operationsgruppe bzw. die damit verbundenen Werte auf 0 setzbar bzw. durch willkürlich bestimmbare andere Werte ersetzbar, so dass daraus eine neue, alternative Operationsgruppe erzeugt werden kann. Derart ist es dem Anwender möglich, sich jedes spezielle Kabel als eine Gruppe von Operationsgruppen in einer Datenbank anzulegen, in der er später einfach mit einem Befehl das Kabel anwählen kann.

Gemäss einer Weiterentwicklung dieser Erfindung können solche Operationsgruppen auch überlappend (z.B. zu grösseren Operationsgruppen) zusammengeschlossen werden, um komplexere Abisolieraufgaben (z.B. Kabel mit ausserordentlich vielen Abisolierstufen) - automatisch - zu lösen.

Es ergeben sich somit modulartige Verfahrensschrittblöcke, die jeder für sich bevorzugt frei programmierbar sind.

Im Regelfall muss daher ein Anwender bei einem Kabelwechsel nur mehr das eine oder andere Kabel in der Datenbank anwählen, um die Abisolierung des Kabels wunschgemäss anzusteuern.

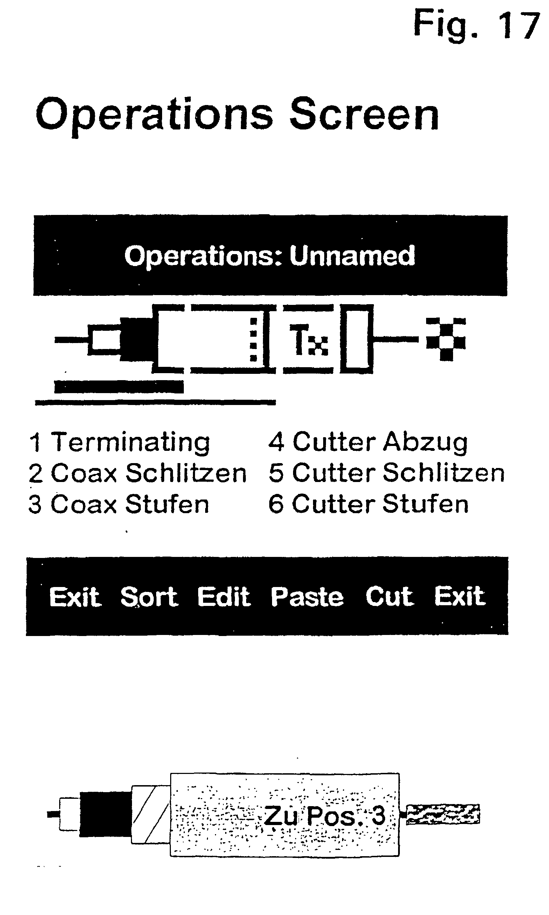

Gemäss einer besonderen Ausbildung der Erfindung werden die Programm-(modul-)gruppen auf einem Display dargestellt. Fig.17 zeigt ein Beispiel einer solchen Darstellung zusammen mit dem Schema eines gewünschten abisolierten Kabelstückes. Schematisch ist auf dem Display das Kabel bzw. dessen Bearbeitungs-Operationsgruppen dargestellt. Eine Menueleiste ist ebenso vorgegeben.

Ganz links im Schema sieht man einen völlig normalen dreistufigen Abzug. Daran schliesst die vierte Stufe des Abzugs an, bestehend aus einem geschlitzten Fenster ohne linkes Ende und ohne Schlitz, dessen Teilabzug eine grosse Länge aufweist. Als nächste Operation erhält man einen Text. Diesem folgt das rechte Ende: Vollabzug. Dieser wird gebildet aus einem Mehrfachabzug in einem Stück (es gibt andere Möglichkeiten, dies ist jedoch die empfohlene). Dieses Ende wird zusätzlich von einem externen Gerät bearbeitet (z.B. gekrimpt).

Die einzelnen Operationen werden also schematisch hintereinander dargestellt. Dabei werden gegebenenfalls die einzelnen Operationssymbole nicht vollständig dargestellt, sondern jeweils diejenige Auswahl, die der Benutzer durch die Eingabe der Parameter wählte. Das Kabel enthält höchstens am Ende Leerteile. Besteht es aus weniger Operationen, so wird es einfach kürzer. Sehr viele Operationen können dazu führen, dass das Kabel gescrollt wird. Dabei wird jeweils um ca. die Hälfte eines Bildschirms gesprungen. Die Darstellung ist weder in X noch in Y massstabgetreu.

Unter dem Kabel sind zwei Balken dargestellt. Der obere, dicke Balken zeigt an, welche Operation z.Z. vom Benutzer angesteuert wird (Wählen anderer Operationen s. unter Tasten, Enter und Back): Der (evtl. die) dünnere(n) zeigen, welche weiteren Operationen z.Z. angesteuerte überschneiden. Dabei werden solche, die gar nicht überschneiden, nicht angezeigt (wie der Text); weitere, die irgendwo innerhalb der ersten enden, enden in der Mitte; solche die am gleichen Ort enden, wie der dicke Balken, enden ebendort; und solche, die gar darüber hinaus reichen (wie der Abzug der äussersten Schicht) reichen auch über den dicken Balken hinaus. Es werden bis zu zwei Überschneidungen pro Seite angezeigt, auf weitere wird durch drei Punkte auf der entsprechenden Seite hingewiesen. Operationen, die ganz unter einer anderen liegen, werden als Strich halber Länge in der Mitte der anderen Operation angezeigt.

Darunter ist das Auswahlmenu für die Operationen eines Endes dargestellt. Details zu den Menüs sind beispielhaft wie folgt belegt:

Es stehen verschiedene Menüs zur Auswahl. Das eine (Enden-Menü) wird aktiviert, wenn der Benutzer auf einem Ende des Kabels steht. Das andere (Mittelteil-Menü) wird aktiviert, wenn der Benutzer nicht auf einem Ende des Kabels steht. Liste der Operationen und der dadurch ansteuerbaren Funktionen s. weiter unten. Wird eine der entsprechenden Tasten gedrückt, so wird eine neue Operation eingefügt.

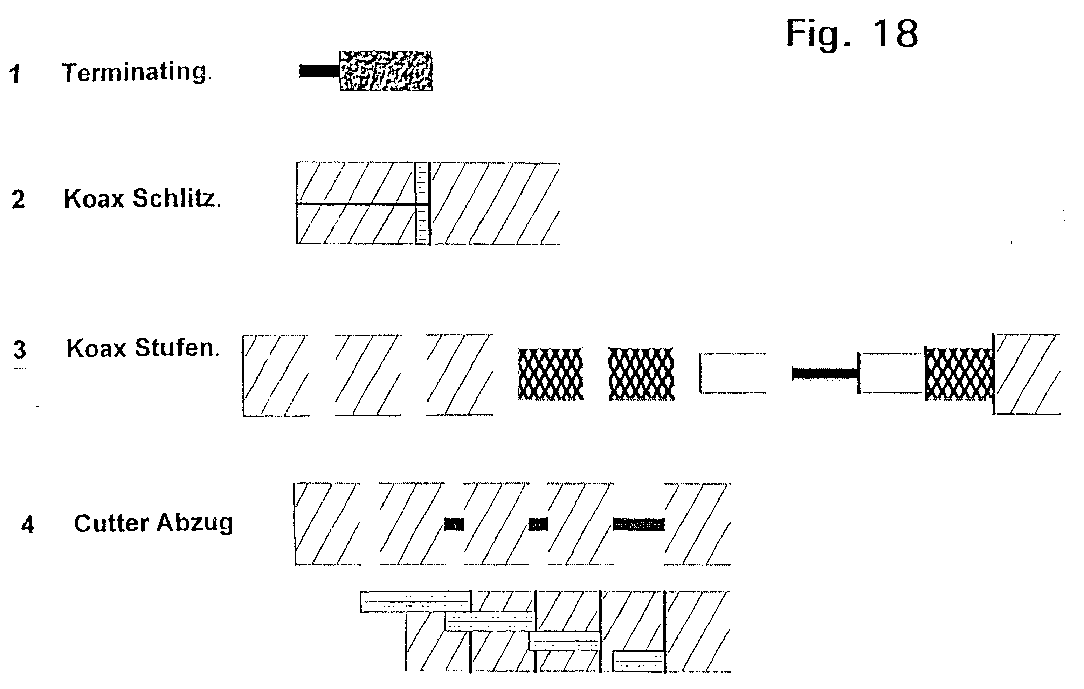

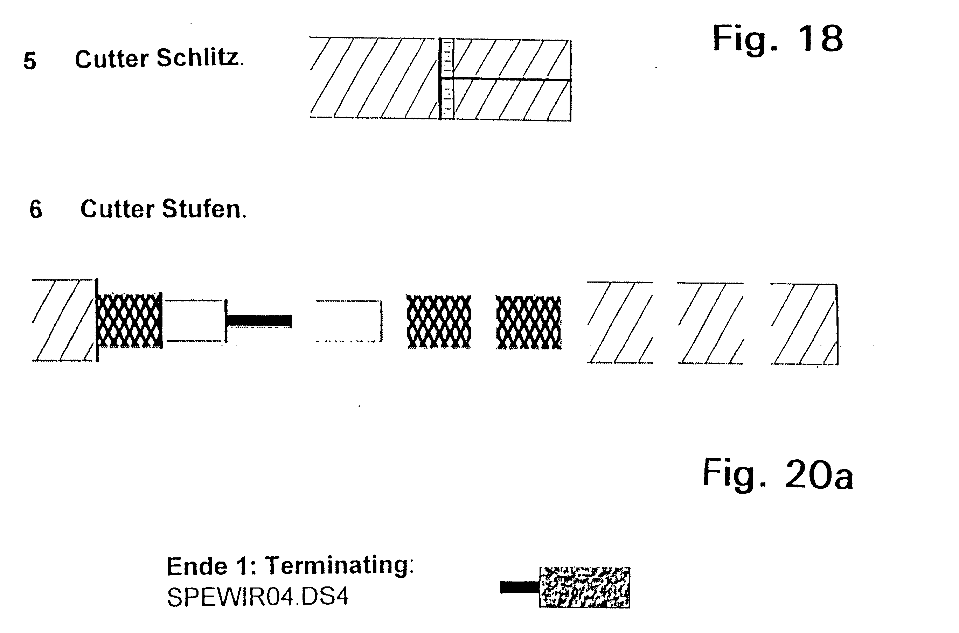

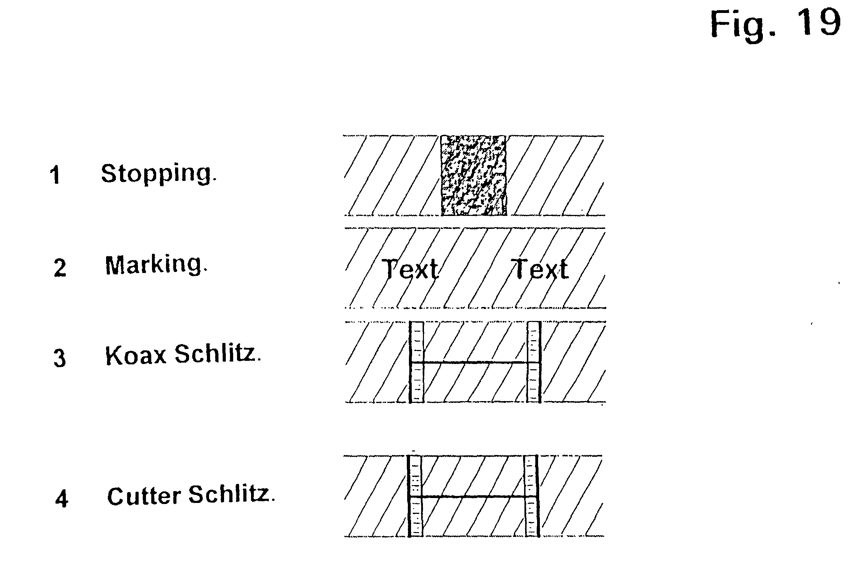

Fig. 18 zeigt und beschreibt beispielhaft und symbolisch mögliche Operationsgruppen für die Kabelendbearbeitung, während Fig. 19 beispielhafte Auskunft über Operationsgruppen für den Mittelteil angibt.

Fig. 8 zeigt eine universelle Führung 17 (nur horizontal geführt). Diese wird bei Bedarf dem Kabeldurchmesser angepasst. Eine wegschwenkbare Führung 9 wird bei Bedarf dem Kabeldurchmesser angepasst.

Die dargestellten Kabelstücke beziehen sich auf folgende Verarbeitungsmöglichkeiten: Verarbeitung in short mode, wenn L kleiner als 52mm, Verarbeitung in spez. mode, wenn Abisolierlänge rechts grösser als 50mm ist. Die Isolation kann auch in mehreren Teilschnitten abgezogen werden. Vorteil dieser Variante: Sie ist schneller als die Variante gem. Figur 9 und sie erlaubt eine grössere Abzugslänge links und rechts. Nachteil dieser Variante: Ausschwenken des Kabels mit Führung 9. Kurze Koax-Kabelstücke können nicht verarbeitet werden.

Fig. 9 zeigt ebenso beidseitig je eine universelle Führung 17 (nur horizontal geführt). Sie wird dem Kabeldurchmesser angepasst. Sie können wegschwenkbar sein. Die dargestellten Kabelstücke beziehen sich auf folgende Verarbeitungsmöglichkeiten: Verarbeitung in short mode, wenn L kleiner als 52mm; Verarbeitung in spez.mode, wenn Abisolierlänge rechts grösser als 50mm ist. Die Isolation kann in mehreren Teilschnitten abgezogen werden. Vorteil dieser Variante: kein Ausschwenken des Kabels; Verarbeitung kürzerer Koax-Kabel ist möglich. Nachteil: langsamer als Variante gem. Fig. 8; max. 50mm Abzugslange auf der linken Seite; max. 50mm Vollabzug auf der rechten Seite.

Die in Fig. 17 am beispielhaften Bildschirm angegebenen Bearbeitungsmöglichkeiten sind in der Fig. 18 symbolisch dargestellt. Bei den Vorgängen ergeben sich dabei erfindungsgemäss folgende Besonderheiten:
1) Terminating: Hält an, bis das Eingangssignal (Robotik) eine abgeschlossene Verarbeitung anzeigt.
2) Koax Schlitzen: Wird immer angezeigt; die Bearbeitung findet jedoch nur statt, wenn in den Systemparametern auch eine Koaxbox eingestellt ist. Dies ist so, damit man schnell einen Blick auf Koaxdrähte werfen kann, auch wenn man gerade nicht Koax bearbeitet. Unter Koaxbox vesteht der Fachmann ein Zusatzmodul mit rotierenden Messern zum Einschneiden von Koaxialkabeln.
3) Koax Stufen: Kann für Abzüge bis zu drei Stufen (vier Schichten) verwendet werden. Auch der Abzug für die entsprechenden Stufen kann hier definiert werden.
4) Cutter Abzug: Erlaubt einen mehrfachen Abzug (ohne Koax, wobei Koax Operationen 'unabhängig' davon an die gewunschte Stelle plaziert werden können). Es kann sich dabei aber auch um einen einteiligen Abzug handeln - sowohl Voll, als auch Teilabzug sind möglich. Ebenso können multiple Windows (freie Fenster im Kabel) definiert werden. Die Grafiken zum Cutter Abzug zeigen das Verfahren zuerst als Vorgehen, darunter als Resultat.
5) Cutter Schlitzen: Erlaubt die Definition eines geschlitzten Endes mit Anreissen der Isolation zum leichteren Entfernen.
   Da jede einzelne Operation weggelassen werden kann, stehen so diverse Möglichkeiten zur Auswahl (s. unten). Dieses Verfahren ist analog zum Vorgang 2, wobei jedoch statt der Koax-Box der Messerkopf benutzt wird.
6) Cutter Stufen: Kann für Abzüge bis zu drei Stufen(vier Schichten) verwendet werden. Auch der Abzug für die entsprechenden Stufen kann hier definiert werden. Wie Vorgang 3 jedoch wird statt mit der Koax-Box mit dem Messerkopf eingeschnitten.

Die Operationsgruppen im Mittelteil gemäss Fig. 19 erlauben ihre Positionierung jeweils ausgehend vom linken oder rechten Ende. Dabei ergeben sich folgende erfindungsgemässen Besonderheiten:
1) Stopping: Hält an, bis das Eingangssignal eine abgeschlossenen Verarbeitung anzeigt.
2) Marking: Setzt einen Bereich mit einer Anzahl von Texten. Dabei kann auch ein einzelner Text gesetzt werden.
3) Koax Schlitz: Erlaubt die Definition eines geschlitzten Fensters mit beidseitigem Anreissen der Isolation zum leichteren Entfernen.
4) Cutter Schlitz: Erlaubt die Definition eines geschlitzten Fensters mit beidseitigem Anreissen der Isolation zum leichteren Entfernen. Da jede bei 3 und 4 einzelne Operation weggelassen werden kann, kann dies vielseitig verwendet werden. Wie bei Vorgang 3 wird jedoch statt mit der Koax-Box mit dem Messerkopf eingeschnitten.

Verschiedene erfindungsgemässe Grundoperationen für die Enden sind in den Fig. 20a-e dargestellt:
Fig. 20a zeigt symbolisch eine Grundoperation.

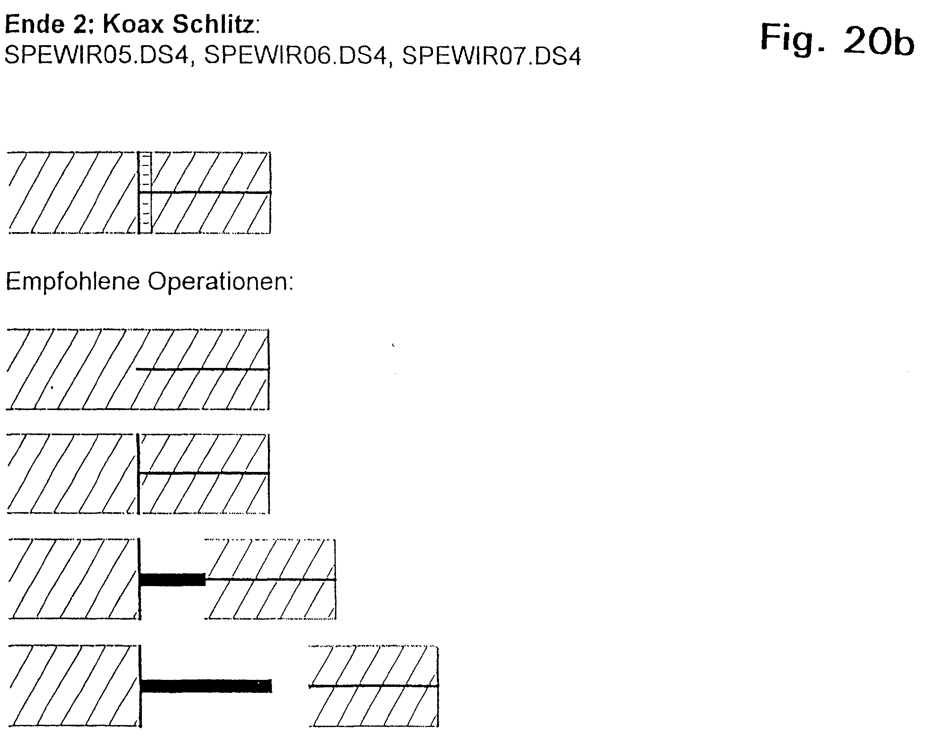

Fig. 20b zeigt im oberen Bild eine Grundoperation mit koaxialem Einschnitt, Längsschnitt und Abzug mit dem Messerkopf, wobei die mit SPE beginnenden Codes kabel- und/oder operationsgruppenspezifisch sind.

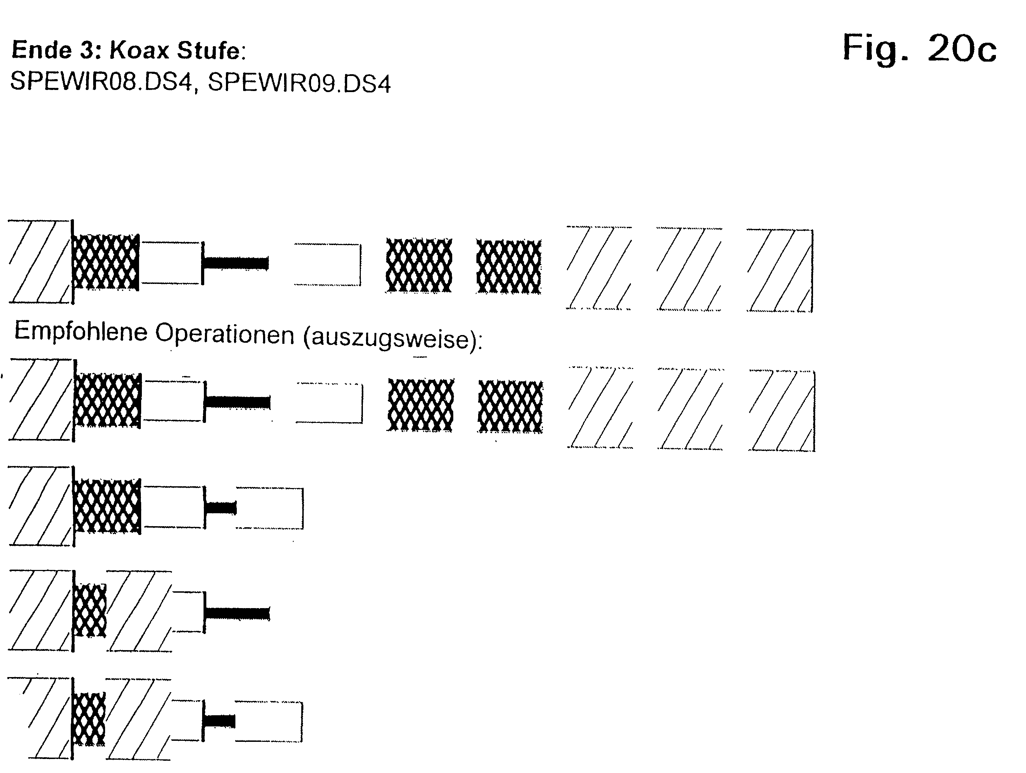

Fig. 20c zeigt eine Grundoperation mit erstem koaxialem Einschnitt, zweitem koaxialem Einschnitt, dritten koaxialem Einschnitt und die entsprechenden Isolations- bzw. Lagenabzüge beginnend vom Bild mit dem flachsten Einschnitt bis zum Abzug mit dem nächst tieferen Einschnitt bis zum Abzug mit dem tiefsten Einschnitt. Darunter sind auszugsweise die empfohlenen Operationen symbolisch angegeben.
   Weitere Varianten sind: Auch zwei- oder einstufig einzuschneiden bzw. einzelne Schnitte und zugehörige Abzuge wegzulassen bzw. Weglassen jedes einzelnen Abzuges aller der insgesamt sechs möglichen.

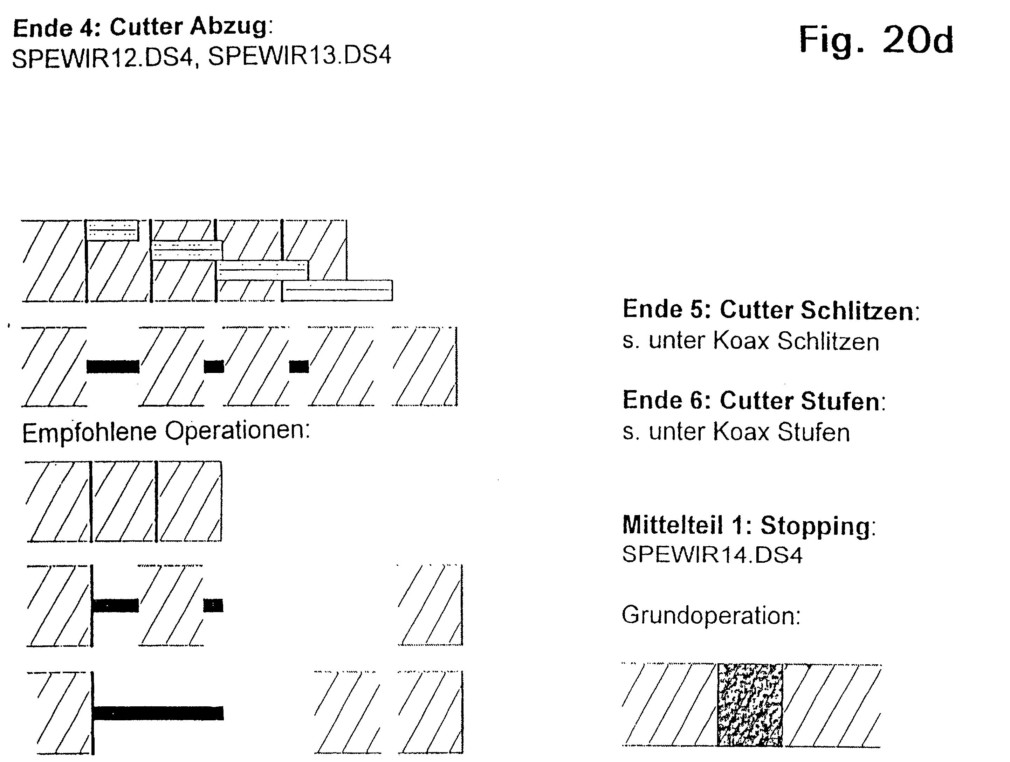

Die Fig. 20d zeigt eine weitere Grundoperation zum Cutterabzug mit folgenden Schritten: 1. äusserer Einschnitt, 2. Abzug zum äussersten Einschnitt, 3, nächster Einschnitt, 4. Abzug zu diesem Einschnitt,.... Dabei sind folgende Parameter einzugeben: Erste Einschneidposition, Länge aller Stückchen(nur ein Wert), Länge des ersten Abzuges, Länge aller übrigen Abzüge (nur ein Wert).

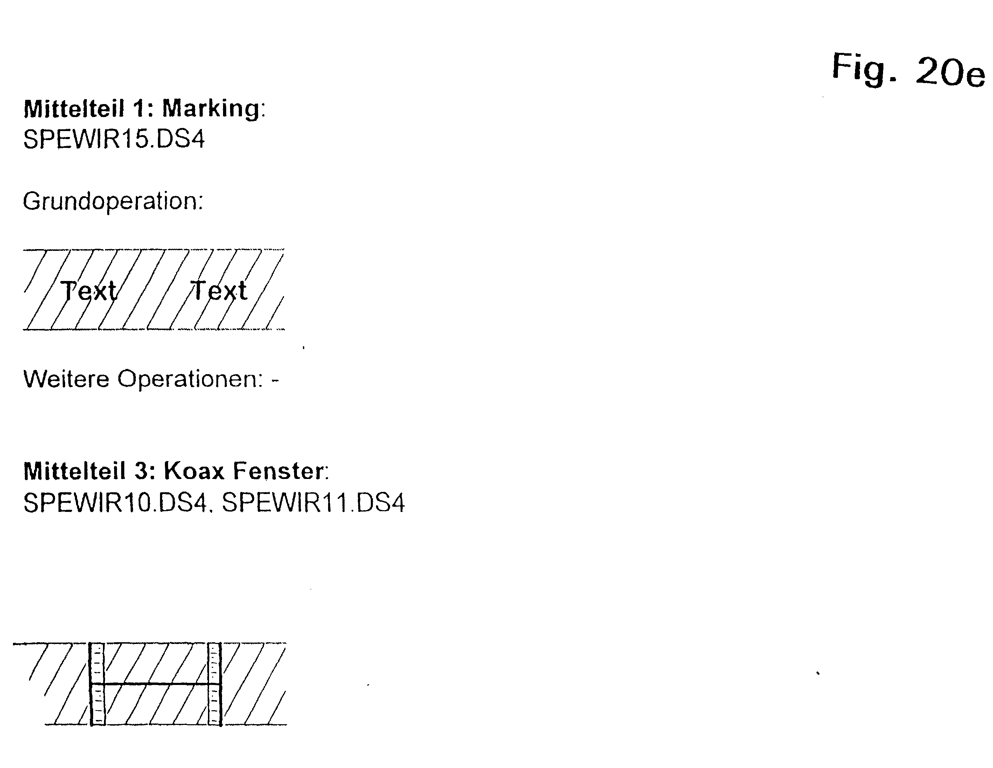

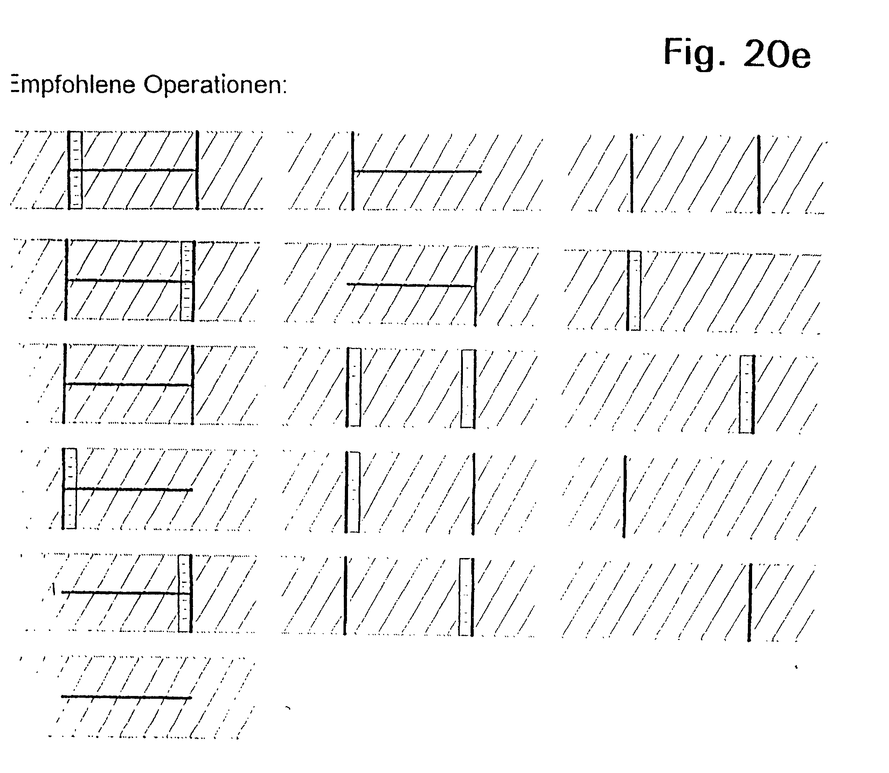

In der Fig. 20e ist im oberen Bild eine symbolische Grundoperation für das Markieren dargestellt. Im unteren Bild ist eine weitere erfindungsgemässe Operation symbolisch dargestellt. Es handelt sich dabei um einen Vorgang koaxial Fenster mit den folgenden Verfahrensschritten: 1. rechter Koax Einschnitt, 2. linker Koax Einschnitt, 3. Längsschlitz, 4. rechter Abzug mit dem Messerkopf, 5. linker Abzug mit dem Messerkopf.

### Bezugszeichenliste

- A-G: austauschbare Module
- a-c: Messervarianten
- 1 a,b: oberer Werkzeugträger
- 2 a,b: unterer Werkzeugträger
- 3 a,b,c,d,e,f,g,h: obere und untere Werkzeuge (Messer o.dgl.)
- 5 a,b,c: Antriebe
- 6: Achse
- 7: Draht
- 9: schwenkbare Führung
- 9b: Führungsrohr
- 10 a,b: Kabelvorschubeinheit
- 11 a-d: Rollenantrieb für Endlosbänder oder direkt zum An trieb des Kabels
- 12: Endlosbandantrieb
- 13: Endlosband, bevorzugt Zahnriemen mit griffiger Förderseite
- 14 a,b: Spindel für Voreinstellung des Bandantrieb 12
- 16 a,b: Schliessantriebe
- 17: Führung
- 24: Riemen
- 25: Antrieb
- 26: Schrittmotor bzw. gesteuerter Antrieb
- 27: Linearführungen
- 28: Anschlag
- 29: Andrückfedern
- 30 b: Schwenkkörper
- 31: Anschlag
- 31b: Gummipuffer
- 32: Verschiebemagnet
- 33: Stössel
- 34: Kurbelstange
- 35: Lager
- 40 a,b: verschiebbare Führungshülsen
- 41: Drehgeber, Encoder
- 42: Induktivsensor o.dgl.
- 43 a,b: Schnappverschluss
- 44 a,b: Führungsstangen, die den Schnappverschluss 43 tragen.
- 45 a,b: Antriebe hier pneumatisch, jedoch auch andere Antriebe möglich. Sie beinhalten einen Zylinder und eine Führung.
- 46: Pressluftausblasöffnung
- 47: Antrieb, Schrittmotor
- 48: Zahnriemen
- 49: Schnappfedern
- 50: Antriebsrollenhaltekörper
- 51 a,b: Stellmutter
- 52 a,b: Mitnahmekörper
- 57: Leiter

## Patentansprüche

1. Kabelbearbeitungsvorrichtung, insbesondere Abisoliervorrichtung, mit einem Paar Werkzeugträger (1,2) zur Aufnahme - von wenigstens zwei paarweiseen Werkzeugen (3), insbesondere Messerpaaren, z.B. je Paar ein Messer oben und ein Messer unten, und einer Werkzeugträgervorschubeinrichtung (5) zur Positionierung des einen oder anderen Werkzeuges (3a,b,c,d) über einer Achse (6), entlang der ein abzuisolierendes Kabel (7) in seiner Vorschubrichtung einschiebbar ist, wobei die Werkzeugträgervorschubeinrichtung (5) für einen gesteuerten Seitantrieb für das gesteuerte Seitwärtsverschieben wenigstens eines Werkzeugträgers (1,2) auf beliebige Positionen innerhalb eines Arbeitsbereiches seitlich der Achse (6) ausgebildet ist.

2. Vorrichtung nach Anspruch 1, **dadurch gekennzeichnet, dass** jedem Werkzeugträger (1,2) eine eigene Werkzeugträgerverschubeinrichtung (5a,b) zugeordnet ist, so dass obere und untere Werkzeugpositionen kombinierbar sind.

3. Vorrichtung nach Anspruch 1, **dadurch gekennzeichnet, dass** beide Werkzeugträger (1b,2b;1c,2c) an einem gemeinsamen Trägerteil (8) gehalten und mit diesem gemeinsam verschiebbar sind.

4. Vorrichtung nach einem der vorhergehenden Ansprüche, **dadurch gekennzeichnet, dass** die Werkzeugträger (1,2) in seitlicher Richtung mehrere, gegebenenfalls stufenlos positionierbare, Aufnahmevorrichtungen für die Werkzeuge (3) aufweisen, wobei die Werkzeuge (3) vorzugsweise nicht auf Messer eingeschränkt sind, sondern aus der Gruppe der kabelverarbeitenden Werkzeuge nach Bedarf wählbar sind und beispielsweise umfassen: Crimpwerkzeuge, Vertwistwerkzeuge, Stanzwerkzeuge, Klemmvorrichtungen, Markiervorrichtungen, Schleifeinrichtungen usw.

5. Vorrichtung nach einem der vorhergehenden Ansprüche, **dadurch gekennzeichnet, dass** die Werkzeughalter (1,2) - gegebenenfalls auch unabhängig voneinander - zueinander bzw. zur oder von der Achse (6) stufenlos verstellbar sind.

6. Vorrichtung nach einem der vorhergehenden Ansprüche, **dadurch gekennzeichnet, dass** eine seitlich oder nach oben bzw. unten verschwenkbare Führungsvorrichtung (9) vorgesehen ist, die zur Erhöhung der Abisolierlängen seitlich oder vorzugsweise nach oben ausschwenkbar ist, um das Rückschieben eines bereits jenseits der Werkzeuge (3) liegenden Kabels (7) gegen die Einschubrichtung kollisionsfrei zu ermöglichen.

7. Vorrichtung nach einem der vorhergehenden Ansprüche, **dadurch gekennzeichnet, dass** entlang der Achse (6) vor und vorzugsweise auch hinter den Werkzeugen (3) eine Kabelvorschubeinheit (10) vorgesehen ist, die über wenigstens je ein Rollenpaar (11) und/oder über je ein Endlosbandpaar (12) verfügt.

8. Vorrichtung nach Anspruch 7, **dadurch gekennzeichnet, dass** die einander vis-à-vis der Achse (6) Liegenden Rollen (11) oder Endlosbänder (12) - vorzugsweise stufenlos - zueinander verstellbar sind und insbesondere kabelabhängig vorschubgesteuert öffen- und schliessbar sind (so dass z.B. ein ankommendes Kabel (7) zwischen geöffneten Rollen (11) bzw. Bändern (12) empfangen und mittels zueinander bewegten bzw. geschlossenen Rollen (11) bzw. Bändern (12) weitertransportiert wird) und/oder gegeneinander unter einem - vorzugsweise variier- bzw. steuerbaren -Anpressdruck gehalten sind.

9. Vorrichtung nach Anspruch 7 oder 8, **dadurch gekennzeichnet, dass** im Falle eines Endlosbandpaares (12) die Endlosbänder (13) um je zwei Rollen (11) geführt sind, denen vorzugsweise wenigstens eine Stützrolle (14) dazwischen zur Unterstützung des Bandes (13) im mittleren Bereich zugeordnet ist, und/oder dass die Bänder (13) an ihrer Innenseite zahnriemenförmig und/oder an ihrer Aussenseite rutschfest ausgebildet sind.

10. Vorrichtung nach einem der Ansprüche 7-9, **dadurch gekennzeichnet, dass** im Falle von Endlosbandpaaren (12) die Endlosbänder (13) wenigstens eine der Rollen (11) oder eines der Bänder der Paare (12) ersatzlos abnehmbar und/oder durch vorzugsweise beschichtete Antriebsrollen (11) ersetzbar sind.

11. Vorrichtung nach einem der vorhergehenden Ansprüche 7-10, **dadurch gekennzeichnet, dass** wenigstens die oberen und unteren Rollen (11) bzw. Endlosbänder (12) eines Rollenpaares bzw. eines Endlosbandpaares relativ zueinander seitlich verschiebbar sind, so dass auf ein zwischenliegendes Kabel (7) ein Twistvorgang ausübbar ist.

12. Vorrichtung nach einem der vorhergehenden Ansprüche, **dadurch gekennzeichnet, dass** die Werkzeugträgervorschubeinrichtung (5) wenigstens einen Motor, z.B. einen Schrittmotor (23), insbesondere einen Linearschrittmotor, und einen programmierbaren Mikroprozessor zu dessen Ansteuerung und/oder einen Kabelfehlsensor umfasst, und/oder dass mehrere Werkzeugträgervorschubeinrichtungen (5) mit mehreren Werkzeugträgern (1,2) entlang der Achse (6) angeordnet sind.

13. Kabelbearbeitungsvorrichtung mit einem Rollen- oder Bandpaarantrieb nach einem der vorhergehenden Ansprüche, **dadurch gekennzeichnet, dass** die Rollen- oder Bandpaare (11,12) durch Schrittmotore - vorzugsweise über Spindeln - zueinander verstellbar sind, wobei den Motoren eine Steuerung mit automatischem RESET und/oder einer programmierbaren Schaltung und/oder wenigstens ein Druckmessensor zur Erfassung und/oder messtechnischen Auswertung des Anpressdruckes auf das Kabel (7) zugeordnet sind.

14. Kabelbearbeitungsvorrichtung mit Antriebs- und Bearbeitungsstationen nach einem der vorhergehenden Ansprüche, **dadurch gekennzeichnet, dass** eine gemeinsame Grundplatte vorgesehen ist, an der entlang der Achse (6) Antriebs- bzw. Vorschub- bzw. Werkzeughalterund/oder Mess- oder Markiermodule an vorgegebenen Positionen montier- bzw. demontier- oder austauschbar vorgesehen sind.

15. Kabelbearbeitungsvorrichtung mit einem Rollen- oder Bandvorschub nach einem der vorhergehenden Ansprüche, **dadurch gekennzeichnet, dass** dem Rollen- oder Bandvorschub weiters zugeordnet sind eine automatische Einfädelvorrichtung und/oder eine Messvorrichtung für die Zugbelastung am Kabel (7) und/oder eine dynamische Anpressdruckeinrichtung auf die vorschubrollen (11) bzw. Vorschubbänder (12) insbesondere in Abhängigkeit von der Zugbelastung am Kabel (7) und/oder eine Kabelgeraderichtvorrichtung und/oder ein Längenzählmesswerk und/oder ein Kabelmantelauswerfer (gegebenenfalls mittels Pressluft) und/oder eine seitlich öffenbare Kabelführung zum. Auswurf von Abisolierresten.

16. Kabelbearbeitungsvorrichtung mit einem Werkzeugträger für Werkzeugzustellung nach einem der vorhergehenden Ansprüche, **dadurch gekennzeichnet, dass** an einer Verstellspindel (14) des Werkzeugträgers für die Werkzeugzustellung ein Encoder (41) angeordnet ist, der im Betriebszustand in Abhängigkeit von der Antriebsbewegung eines Antriebsmotors (23;16) - gegebenenfalls über den Vergleich mit einem vergleichbaren Encoderwert am Encoder dieses Antriebes (23;16) - für diese Verstellspindel (14)deren Drehbewegung überwacht, um ein erfolgtes Schliessen der Werkzeuge (3) zu detektieren und die Antriebsbewegung zu stoppen bzw. den Antrieb oder dessen Encoder zu eichen bzw. zu initialisieren, wobei die Verbindung zwischen Antriebsmotor (23;16) und Spindel (14) vorzugsweise elastisch - insbesondere über einen Zahnriemen (24) gekuppelt ist.

17. Verfahren für den Betrieb einer Kabelbearbeitungsvorrichtung mit Werkzeughalter nach einem der vorhergehenden Ansprüche, **dadurch gekennzeichnet, dass** ein Überwachungsglied vorgesehen ist, das den Öffnungszustand der Werkzeughalter (1) überwacht und kurz vor dem Schliessen derselben die Antriebskraft des Antriebsmotors (23;16) reduziert, so dass er die Werkzeughalter mit geringer Kraft in die Schliessposition bringt, wobei diese gegebenenfalls dadurch detektiert wird, dass ein mit dem Antriebsmotor (23;16) verbundener oder integrierter Encoder trotz Zuführung von Antriebsenergie seine Schritte (der Drehbewegung) verliert.

18. Vorrichtung nach einem der Ansprüche 1-16, **dadurch gekennzeichnet, dass** ein Steuerglied mit Rechner vorgesehen ist, das im Betriebszustand nach Eingabe des Kabeldurchmessers und gegebenenfalls einer Kabeltypenbezeichnung und der gewünschten Abisolierlänge automatisch eine Voröffnung der Bandantriebe (12) und/oder einen Anpressdruck für das Abziehen langer Isolationsstucke berechnet und einstellt bzw. die Antriebe entsprechend steuert.

19. Kabelbearbeitungsvorrichtung mit einem ersten und einem zweiten Bandantrieb für einen Kabelvorschub nach einem der vorhergehenden Ansprüche 1-16 oder 18, **dadurch gekennzeichnet, dass** dem zweiten Bandantrieb (12b) eine Steuerung und eine Greifvorrichtung zugeordnet ist, wobei erstere den Bandantrieb (12b) sofort nach Abisolation des hinteren Endes des vorderen Kabelabschnittes löst und das Kabel freigibt, so dass es durch die Greifvorrichtung entfernt werden kann.

## Claims

1. Cable processing apparatus, in particular insulation stripping apparatus, having a pair of tool supports (1, 2) for holding at least two tools (3) in pairs, in particular pairs of knives, for example one top knife and one bottom knife per pair, and a tool support feed means (5) for positioning of one or other tool (3a,b,c,d) above an axis (6), along which a cable (7) whose insulation is to be stripped can be inserted in its feed direction, the tool support feed means (5) being formed for a controlled lateral drive for the controlled sideward movement of at least one tool support (1, 2) to any desired positions within a working range laterally with respect to the axis (6).

2. Apparatus according to Claim 1, **characterized in that** a separate tool support feed means (5a,b) is coordinated with each tool support (1, 2) so that upper and lower tool positions can be combined.

3. Apparatus according to Claim 1, **characterized in that** both tool supports (1b, 2b; 1c, 2c) are held on a common support part (8) and can be displaced together with the latter.

4. Apparatus according to any of the preceding Claims, **characterized in that** the tool supports (1, 2) have, in the lateral direction, a plurality of optionally continuously positionable holders for the tools (3), the tools (3) preferably not being restricted to knives but being selectable as required from the group consisting of the cable-processing tools and, for example, comprising: crimping tools, twisting tools, punching tools, clamping apparatuses, marking apparatuses, grinding means, etc.

5. Apparatus according to any of the preceding Claims, **characterized in that** the tool holders (1, 2) - optionally also independently of one another - are continuously adjustable relative to one another or towards or away from the axis (6).

6. Apparatus according to any of the preceding Claims, **characterized in that** a guide apparatus (9) which can be swivelled laterally or upwards or downwards is provided, which guide apparatus can be swivelled laterally or preferably upwards for increasing the insulation stripping lengths, in order to enable a cable (7) already the other side of the tool (3) to be pushed back against the feed direction without collision.

7. Apparatus according to any of the preceding Claims, **characterized in that** a cable feed unit (10) which has at least one pair (11) of rollers and/or one pair (12) of continuous belts is provided along the axis (6), before and preferably also behind the tools (3).

8. Apparatus according to Claim 7, **characterized in that** the rollers (11) or continuous belts (12) located opposite one another across the axis (6) are - preferably continuously - adjustable relative to one another and in particular can be opened and closed in a cable-dependent and feed-controlled manner (so that, for example, a cable (7) arriving is received between opened rollers (11) or belts (12) and is transported onwards by means of rollers (11) or belts (12) moved towards one another or closed) and/or are held against one another under a - preferably variable or controllable - contact pressure.

9. Apparatus according to Claim 7 or 8, **characterized in that**, in the case of a continuous belt pair (12), the continuous belts (13) are each guided around two rollers (11), between which, in the middle region, preferably at least one support roller (14) is arranged for supporting the belt (13), and/or that the belts (13) are in the form of a toothed belt on their inside and/or are slip-resistant on their outside.

10. Apparatus according to any of Claims 7-9, **characterized in that**, in the case of continuous belt pairs (12), the continuous belts (13), at least one of the rollers (11) or one of the belts of the pairs (12) can be removed without replacement and/or can be replaced by preferably coated drive rollers (11).

11. Apparatus according to any of the preceding Claims 7-10, **characterized in that** at least the upper and lower rollers (11) or continuous belts (12) of a pair of rollers or of a pair of continuous belts, respectively, are displaceable laterally relative to one another so that a twisting procedure can be performed on a cable (7) lying in between.

12. Apparatus according to any of the preceding Claims, **characterized in that** the tool support feed means (5) comprises at least one motor, for example a stepping motor (23), in particular a linear stepping motor, and a programmable microprocessor for the control thereof and/or a cable absence sensor, and/or that a plurality of tool support feed means (5) having a plurality of tool supports (1, 2) are arranged along the axis (6).

13. Cable processing apparatus having a drive for a pair of rollers or of belts, according to any of the preceding Claims, **characterized in that** the pairs (11, 12) of rollers or of belts are adjustable relative to one another by means of stepping motors - preferably via spindles, a control having an automatic RESET and/or a programmable circuit and/or at least one pressure sensor for measuring and/or evaluating the contact pressure on the cable (7) being coordinated with the motors.

14. Cable processing apparatus having drive and processing stations, according to any of the preceding Claims, **characterized in that** a common baseplate is provided, on which drive or feed or tool holder and/or measuring or marking modules are provided in a mountable or removable or interchangeable manner at predetermined positions along the axis (6).

15. Cable processing apparatus having a roller feed or belt feed, according to any of the preceding Claims, **characterized in that** an automatic threading apparatus and/or a measuring apparatus for the tensile load on the cable (7) and/or a dynamic contact pressure means on the feed rollers (11) or feed belts (12), in particular as a function of the tensile load on the cable (7), and/or a cable straightening apparatus and/or a length sensor and/or a cable sheath ejector (optionally by means of compressed air) and/or a laterally openable cable guide for ejecting stripped insulation residues are furthermore coordinated with the roller feed or belt feed.

16. Cable processing apparatus having a tool support for tool feed, according to any of the preceding Claims, **characterized in that** an encoder (41) is arranged on an adjusting spindle (14) of the tool support for the tool feed, which encoder, in the operating state, as a function of the drive movement of a drive motor (23; 16) - optionally by comparison with a comparable encoder value on the encoder of this drive (23; 16) - monitors its rotary movement for this adjusting spindle (14) in order to detect completed closing of the tools (3) and to stop the drive movement and to calibrate or to initialize the drive or its encoder, the connection between drive motor (23; 16) and spindle (14) preferably being elastically coupled, in particular via a toothed belt (24).

17. Process for operating a cable processing apparatus having tool holders, according to any of the preceding Claims, **characterized in that** a monitoring member is provided that monitors the opening state of the tool holders (1) and reduces the drive force of the drive motor (23; 16) shortly before the closing of said tool holders, so that it brings the tool holders into the closed position with slight force, said position optionally being detected by virtue of the fact that an encoder connected to or integrated with the drive motor (23; 16) loses its steps (of the rotary movement) in spite of the supply of drive energy.

18. Apparatus according to any of Claims 1-16, **characterized in that** a control member having a computer is provided, which, in the operating state, after input of the cable diameter and optionally a cable type designation and the desired insulation stripping length, automatically calculates and sets an initial opening of the belt drives (12) and/or a contact pressure for stripping of long insulation sections or appropriately controls the drives.

19. Cable processing apparatus having a first and a second belt drive for a cable feed, according to any of the preceding Claims 1-16 or 18, **characterized in that** a control and a gripping apparatus are coordinated with the second belt drive (12b), the former, the belt drive (12b) [sic] releasing the cable immediately after stripping of the insulation of the rear end of the front cable section, so that it can be removed by the gripping apparatus.

## Revendications

1. Dispositif de traitement de câble, particulièrement dispositif de dénudage, comprenant une paire de porte-outils (1, 2) pour recevoir au moyens deux outils jumelés (3), particulièrement des paires de lames, p.e. une lame au-dessus et une lame en bas par paire, et un dispositif d'avance de porte-outils (5) pour positionner l'un ou l'autre outil (3a, b, c, d) au-dessus d'un axe (6), le long duquel un câble à dénuder (7) est introducible en sa direction d'avance, le dispositif d'avance de porte-outils (5) étant formé pour un déplacement latéral commandé pour déplacer latéralement au moins un porte-outils (1, 2) aux positions quelconques au dedans d'un champ d'activité à côté de l'axe (6).

2. Dispositif selon la revendication 1, **caractérisé en ce qu'**un dispositif d'avance de porte-outils (5a, b) spécifique est associé à chaque porte-outils (1, 2), de manière que des positions d'outils supérieures et inférieure peuvent être combinées.

3. Dispositif selon la revendication 1, **caractérisé en ce que** les deux porte-outils (1b, 2b; 1c, 2c) sont supportés par une pièce de support (8) commune et sont déplaçables conjointement avec celui-ci.

4. Dispositif selon une quelconque des revendications précédentes, **caractérisé en ce que** les porte-outils (1, 2) comprennent en direction latéral plusieurs dispositifs de réception pour les outils (3), le cas échéant positionnables sans gradation, les outils (3) préférablement n'étant pas limités aux lames, mais sont sélectionnables selon besoin de la groupe des outils de traitement de câble et comprennent pas exemple: des outils de sertissage crimp, des outils de torsion [twist], des outils pour estampage, des dispositifs de serrage, des dispositifs de marquage, des dispositifs de polissage etc.

5. Dispositif selon une quelconque des revendications précédentes, **caractérisé en ce que** les porte-outils (1, 2) sont ajustables sans gradation l'un vers l'autre ou vers ou de l'axe (6), le cas échéant aussi indépendamment l'un de l'autre.

6. Dispositif selon une quelconque des revendications précédentes, **caractérisé en ce qu'**un dispositif de guidage (9) est prévu, qui est pivotable soit latéralement, soit en haut ou en bas, et qui est pivotable latéralement ou, de préférence, en haut pour augmenter les longueurs de dénudage pour rendre possible sans collision le déplacement en retraite d'un câble (7), étant déjà au-delà des outils, contre la direction d'avance.

7. Dispositif selon une quelconque des revendications précédentes, **caractérisé en ce qu'**une unité d'avance de câble (10) est prévue le long de l'axe (6) devant ou préférablement aussi derrière les outils (3), qui possède au moins une paire respective de poulies (11) et/ou une paire respective de bandes en boucle continue (12).

8. Dispositif selon la revendication 7, **caractérisé en ce que** les poulies (11) ou bandes en boucle continue (12), opposés les uns à les autres vis-à-vis de l'axe (6) sont ajustables les uns vers les autres, préférablement sans gradation, et en particulier peuvent être ouverts et fermés en fonction du câble sous la commande de l'avancement (de manière que, par exemple, un câble (7) arrivant est reçu entre les poulies (11) ou bandes (12) ouverts et est transporté au moyens des poulies (11) ou bandes (12) mues les uns vers les autres ou fermés) et/ou sont maintenus sous une pression, préférablement variable ou commandable, les uns contre les autres.

9. Dispositif selon la revendication 7 ou 8, **caractérisé en ce que** dans le cas d'une paire de bandes en boucle continue (12), chaque bande en boucle continue (13) est guidée autour de deux poulies (11), au moins un rouleau d'appui (14) étant associé préférablement entre eux pour appuyer la bande (13) dans une zone moyenne, et/ou que les bandes (13) au côté intérieur ont la forme d'une courroie dentée et/ou ont un côté extérieur antidérapant.

10. Dispositif selon une des revendications 7 à 9, **caractérisé en ce que** dans le cas des paires de bandes en boucle continue (12), les bandes en boucle continue (13) au moins une des poulies (11) ou unes des bandes des paires (12) sont enlevable sans remplacement et/ou peuvent être remplacée par des poulies d'entraînement (11), préférablement enduites.

11. Dispositif selon une des revendications 7 à 10, **caractérisé en ce qu'**au moins les poulies supérieures et inférieures (11) ou les bandes en boucle continue (12) d'une paire de poulies ou d'une paire de bandes en boucle continue sont déplaçable latéralement relativement les uns aux autres, de manière que l'on peut exercer une opération de torsion (twist) à un câble se trouvant entre elles.

12. Dispositif selon une quelconque des revendications précédentes, **caractérisé en ce que** le dispositif d'avance de porte-outils (5) comprend au moins un moteur, p.e. un moteur pas à pas (23), particulièrement un moteur linéaire pas à pas, et un microprocesseur programmable pour commander celui-ci et/ou un capteur de manque de câble et/ou que plusieurs dispositifs d'avance de porte-outils (5) avec plusieurs porte-outils (1, 2) sont disposés le long de l'axe (6).

13. Dispositif de traitement de câble comprenant un mécanisme d'entraînement d'une paire de poulies ou bandes, selon une quelconque des revendications précédentes, **caractérisé en ce que** les paires de poulies ou bandes (11, 12) sont déplaçables par des moteurs pas à pas, de préférence au moyens des broches, les uns vers les autres, un réglage avec un RESET automatique et/ou un circuit programmable et/ou au moins un capteur de pression pour détecter et/ou évaluer d'une technique de mesure la pression appliquée au câble (7) étant associés.

14. Dispositif de traitement de câble comprenant des stations d'entraînement et de traitement, selon une quelconque des revendications précédentes, **caractérisé en ce qu'**une plaque de montage commune est prévue, à laquelle des modules d'entraînement ou d'avance ou de porte-outils et/ou de mesure ou de marquage sont montables ou démontables ou remplaçables le long de l'axe (6).

15. Dispositif de traitement de câble comprenant un mécanisme d'avance à poulies ou à bandes, selon une quelconque des revendications précédentes, **caractérisé en ce qu'**un dispositif d'enfilement automatique et/ou un dispositif de mesure pour la charge de traction et/ou un dispositif presseur dynamique aux poulies d'avance (11) ou aux bandes d'avance (12), particulièrement en fonction de la charge de traction au câble (7) et/ou un dispositif de redressement de câble et/ou un appareil compteur de longueur et/ou un éjecteur de gaine de câble (le cas échéant au moyens d'air comprimé) et/ou un guidage de câble latéralement ouvrable pour l'éjection des restes de dénudage sont associés au mécanisme d'avance à poulies ou à bandes.

16. Dispositif de traitement de câble comprenant un porte-outils pour l'avancement d'un outil, selon une quelconque des revendications précédentes, **caractérisé en ce qu'**un encodeur (41) est disposé à une broche de déplacement (14) du porte-outils pour l'avancement d'un outil, ledit encodeur, en état de marche, contrôlant le mouvement rotatif de cette broche de déplacement (14) en fonction du mouvement d'entraînement d'un moteur d'entraînement (23; 16), le cas échéant au moyens d'une comparaison avec un valeur d'encodeur comparable au encodeur de cet entraînement, pour détecter la fermeture des outils (3) et pour arrêter le mouvement d'entraînement ou calibrer ou initialiser l'entraînement ou l'encodeur de celui-ci, la connexion entre le moteur d'entraînement (23; 16) et la broche (14) étant couplée préférablement d'une manière élastique, particulièrement au moyens d'une courroie dentée.

17. Procédé le fonctionnement d'un dispositif de traitement de câble comprenant un porte-outils, selon une quelconque des revendications précédentes, **caractérisé en ce qu'**un organe de contrôle est prévu, qui surveille la condition d'ouverture des porte-outils (1) et réduit la force motrice du moteur d'entraînement (23; 16) peu de temps avant la fermeture desquels, de manière qu'il amène les porte-outils à la position de fermeture avec une force faible, qui est, le cas échéant, détectée **en ce, qu'**un encodeur relié au moteur d'entraînement ou intégré perde ses pas (du mouvement rotatif) malgré l'alimentation en énergie d'entraînement.

18. Dispositif selon une quelconque des revendications 1 à 16, **caractérisé en ce qu'**un organe de commande comprenant un calculateur est prévu, qui, en état de marche, après l'introduction du diamètre de câble et, le cas échéant, d'une désignation du type du câble et de la longueur de dénudage souhaitée, commande automatiquement la préouverture des mécanisme d'entraînement à bande (12) et/ou calcule et ajuste la pression appliquée pour l'enlèvement des morceaux d'isolation longues et commande les mécanismes d'entraînement d'une manière correspondante.

19. Dispositif de traitement de câble comprenant un premier et un second mécanisme d'entraînement à bande pour l'avance du câble, selon une quelconque des revendications 1 à 16 ou 18, **caractérisé en ce qu'**un réglage et un dispositif de préhension sont associés au second mécanisme d'entraînement à bande (12b), ledit réglage relâchant le câble le mécanisme d'entraînement à bande (12b) immédiatement après le dénudage du bout derrière du morceau de câble de devant, de manière qu'il peut être enlevé par le dispositif de préhension.
